# EUROPEAN PATENT APPLICATION

(11) **EP 3 290 675 A1**
(43) Date of publication of application: **07.03.2018**
(21) Application number: 16786502.1
(22) Date of filing: 27.04.2016
(51) Int. Cl.: F02D 45/00, B62J 99/00, F01P 11/16, G05B 23/02

(54) **STRADDLE-TYPE VEHICLE**

(30) Priority: 28.04.2015 JP 2015091724
(71) Applicant: Yamaha Hatsudoki Kabushiki Kaisha, Iwata-shi, Shizuoka 438-8501 (JP)
(72) Inventor: NONAKA, Daisuke, Iwata-shi Shizuoka 438-8501 (JP); MAEBASHI, Kosei, Iwata-shi Shizuoka 438-8501 (JP)
(74) Representative: Stöckeler, Ferdinand
(86) International application number: PCT/JP2016/063143
(87) International publication number: WO 2016/175226

(57) **Abstract**

A straddled vehicle having a failure detector with improved accuracy in the detection of a failure of a temperature sensor is provided. A failure detector (93, 94) detects a failure of a temperature sensor (72, 75) based on at least one signal of the temperature sensor (72, 75), at least one generated heat amount-related parameter, and at least one dissipated heat amount-related parameter. The generated heat amount-related parameter relates to an amount of heat generated in an engine unit and influencing the temperature of a detection target of the temperature sensor (72, 75) and further relates to a state of the straddled vehicle. The dissipated heat amount-related parameter relates to an amount of heat taken away from the straddled vehicle as the straddled vehicle runs and influencing the temperature of the detection target of the temperature sensor (72, 75) and further relates to an environment of the straddled vehicle.

## Description

### [Technical Field]

The present invention relates to a straddled vehicle including a failure detector which is configured to detect a failure of a temperature sensor.

### [Background Art]

An engine unit of a straddled vehicle such as a motorcycle includes temperature sensors such as an engine temperature sensor, a coolant water temperature sensor, and an intake temperature sensor. The engine temperature sensor is configured to detect a temperature of a cylinder of the engine unit. The coolant water temperature sensor is configured to detect a temperature of coolant water for cooling the engine unit. The intake temperature sensor is configured to detect a temperature of air taken into the engine unit.

There is a known straddled vehicle including a failure detector configured to detect a failure of such a temperature sensor. For example, a failure detector of a straddled vehicle of Patent Literature 1 is configured to detect a failure of at least one temperature sensor based on a difference between temperatures detected by two temperature sensors, respectively. To be more specific, it is determined that there is a failure of at least one temperature sensor when the temperature difference reaches a predetermined threshold. The two temperature sensors detect temperatures of left and right parts of a seat, respectively, or temperatures of left and right grips, respectively.

### [Citation List]

### [Patent Literatures]

Patent Literature 1: Japanese Unexamined Patent Publication No. 2007-50714

### [Summary of Invention]

### [Technical Problem]

The present inventors attempted to detect failures of various types of temperature sensors of straddled vehicles by the method of Patent Literature 1, i.e., by comparing a difference in detected temperatures with a threshold. As a result of this, the present inventors found that the method of Patent Literature 1 was not sufficiently accurate in failure detection at times.

An object of the present invention is to provide a straddled vehicle having a failure detector with improved accuracy in the detection of a failure of a temperature sensor.

### [Solution to Problem and Advantageous Effects of Invention]

As described above, the present inventors attempted to detect a failure of various types of temperature sensors of a straddled vehicle by the failure detection method of Patent Literature 1. The accuracy of the failure detection was not sufficient as a result. The present inventors studied the reason for the inaccuracy. In accordance with the running state of the straddled vehicle, the circumstance of a target of temperature detection by a temperature sensor is varied. The detection target may be air. For example, assume that a detection target is provided in the vicinity of an engine unit. Because the engine rotation speed is increased, an amount of heat generated in the engine unit increases. Therefore, the temperature of the engine unit increases and hence the temperature detected by the temperature sensor may increase. In this case, the engine rotation speed relates to the amount of heat generated in the engine unit. The engine rotation speed functions as a parameter of the increase in temperature of the detection target. Meanwhile, as the vehicle speed is increased, the flow rate of an air flow colliding with the straddled vehicle increases. An amount of heat taken away from the straddled vehicle therefore increases. Therefore, the temperature of the straddled vehicle decreases and hence the temperature detected by the temperature sensor may decrease. In this case, the vehicle speed relates to the amount of heat taken away from the straddled vehicle. The vehicle speed functions as a parameter of decrease in temperature of the detection target.

In addition to the above, an influence of a parameter related to the amount of heat generated in the engine unit on the detection target significantly varies in accordance with the position of the detection target. Furthermore, an influence of a parameter related to the amount of heat taken away from the straddled vehicle on the detection target significantly varies in accordance with the position of the detection target. According to the failure detection method of Patent Literature 1, whether there is a failure is determined based on a difference between temperatures detected by two temperature sensors provided at different positions. The detection targets of the two temperature sensors provided at different positions are differently influenced by a parameter. Therefore, the accuracy of the detection of a failure of a temperature sensor may not be sufficient when a failure of the temperature sensor is detected based on a difference between temperatures detected by two temperature sensors.

In this circumstance, the present inventors conceived of detecting a failure of a temperature sensor not based on a difference between temperatures detected by two temperature sensors but by using a parameter related to an amount of heat generated in the engine unit and a parameter related to an amount of heat taken away from the straddled vehicle.

(1) A straddled vehicle of the present teaching includes: an engine unit; a temperature sensor configured to detect a temperature of a detection target; and a failure detector configured to detect a failure of the temperature sensor. The failure detector is configured to detect a failure of the temperature sensor based on at least one signal of the temperature sensor, at least one generated heat amount-related parameter which relates to an amount of heat generated in the engine unit and influencing the temperature of the detection target and further relates to a state of the straddled vehicle, and at least one dissipated heat amount-related parameter which relates to an amount of heat taken away from the straddled vehicle as the straddled vehicle runs and influencing the temperature of the detection target and further relates to an environment of the straddled vehicle.

According to this arrangement, the straddled vehicle includes a temperature sensor configured to detect a temperature of a detection target. Furthermore, the straddled vehicle includes a failure detector configured to detect a failure of this temperature sensor. The temperature of a detection target of the temperature sensor is influenced by an amount of generated heat generated in the engine unit and an amount of dissipated heat taken away from the straddled vehicle. The failure detector detects a failure of the temperature sensor based on at least one signal of the temperature sensor, at least one generated heat amount-related parameter, and at least one dissipated heat amount-related parameter. The generated heat amount-related parameter relates to the amount of heat generated in the engine unit and influencing the temperature of the detection target. The generated heat amount-related parameter further relates to the state of the straddled vehicle. The dissipated heat amount-related parameter relates to the amount of heat taken away from the straddled vehicle as the straddled vehicle runs and influencing the temperature of the detection target. The generated heat amount-related parameter and the dissipated heat amount-related parameter relate to the environment of the straddled vehicle. In the present teaching, the environment of the straddled vehicle, to which the dissipated heat amount-related parameter relates, may be the flow rate of an air flow blown onto the straddled vehicle. The environment of the straddled vehicle, to which the dissipated heat amount-related parameter relates, may be, for example, the outside temperature. The environment of the straddled vehicle, to which the dissipated heat amount-related parameter relates, may be, for example, the state of raining or submersion of the road. The dissipated heat amount-related parameter may relate to the state of the straddled vehicle itself.

The generated heat amount-related parameter predominantly influences the temperature of the detection target so as to increase the temperature of the detection target. The dissipated heat amount-related parameter predominantly influences the temperature of the detection target so as to decrease the temperature of the detection target. The failure detector detects a failure of the temperature sensor by, for example, comparing a temperature detected by the temperature sensor with a threshold determined based on the two parameters. The failure detector detects a failure of the temperature sensor by using both a parameter related to the amount of heat generated in the engine unit and a parameter related to the amount of dissipated heat taken away from the straddled vehicle. Due to this, even if the temperature of the detection target of the temperature sensor is changed by influences of the generated heat amount and the dissipated heat amount, it is possible to restrain the frequency of erroneous detection that the normal state is erroneously detected as a failure. As a result, the detection of a failure of the temperature sensor is further accurately executed. The accuracy of the failure detection is therefore improved when compared to cases where failure detection is executed without using the generated heat amount-related parameter and the dissipated heat amount-related parameter.

Furthermore, because of the improvement in the detection accuracy, a failure can be detectable based on fewer signals. As a result, the failure detection is completed sooner when compared to cases where failure detection is executed without using the generated heat amount-related parameter and the dissipated heat amount-related parameter.

It is noted that, in the present teaching, the dissipated heat amount-related parameter may also relate to the amount of heat taken away from the vehicle when the straddled vehicle is not running, as long as it relates to the amount of heat taken away from the straddled vehicle when the straddled vehicle is running.

(2) The straddled vehicle of the present teaching preferably includes one of the following features. The failure detector is configured to detect a failure of the temperature sensor by comparing a first determination value derived based on the signal of the temperature sensor with a first failure determination threshold which is determined based on both the generated heat amount-related parameter and the dissipated heat amount-related parameter.

The failure detector is configured to detect a failure of the temperature sensor by comparing a second determination value derived based on at least one of the generated heat amount-related parameter and the dissipated heat amount-related parameter and the signal of the temperature sensor with a second failure determination threshold which is determined based on at least the other one of the generated heat amount-related parameter and the dissipated heat amount-related parameter.

The failure detector is configured to detect a failure of the temperature sensor by comparing a third determination value derived based on the generated heat amount-related parameter, the dissipated heat amount-related parameter, and the signal of the temperature sensor with a predetermined third failure determination threshold.

Hereinafter, the first determination value, the second determination value and the third determination value are collectively termed a determination value. Furthermore, the first failure determination threshold, the second failure determination threshold, and the third failure determination threshold are collectively termed a failure determination threshold.

According to the arrangement above, the failure detector detects a failure of the temperature sensor by comparing a determination value derived based at least on a signal of the temperature sensor with a failure determination threshold. Based on the generated heat amount-related parameter, the determination value or the failure determination threshold is determined. Based on the dissipated heat amount-related parameter, the determination value or the failure determination threshold is determined. It is therefore possible to change the way of using these two parameters in accordance with the type of the generated heat amount-related parameter and the type of the dissipated heat amount-related parameter. A failure of the temperature sensor is detectable by using these two parameters in suitable ways. As a result, the detection of a failure of the temperature sensor is easily done. Furthermore, the accuracy of the detection of a failure of the temperature sensor is further improved.

In the present teaching, the first determination value is derived based on a signal of the temperature sensor. This, however, does not indicate that the first determination value is derived based solely on a signal of the temperature sensor. For example, the first determination value may be derived based on at least one of the generated heat amount-related parameter and the dissipated heat amount-related parameter, in addition to the signal of the temperature sensor. The same applies to the first determination threshold, the second determination value, the second determination threshold, and the third determination value.

(3) The straddled vehicle of the present teaching preferably includes the following features. When the failure detector detects the failure of the temperature sensor by comparing the first determination value with the first failure determination threshold, the first failure determination threshold is preferably one of the following thresholds.

The first failure determination threshold is determined when the generated heat amount-related parameter and the dissipated heat amount-related parameter both satisfy predetermined conditions.

The first failure determination threshold is changed based on the generated heat amount-related parameter and the dissipated heat amount-related parameter.

The first failure determination threshold is determined when one of the generated heat amount-related parameter and the dissipated heat amount-related parameter satisfies a predetermined condition and is changed based on the other one of the generated heat amount-related parameter and the dissipated heat amount-related parameter.

When the failure detector detects the failure of the temperature sensor by comparing the second determination value with the second failure determination threshold, each of the second determination value and the second failure determination threshold is preferably one of the following.

The second determination value is determined when the one of the generated heat amount-related parameter and the dissipated heat amount-related parameter both satisfy a predetermined condition.

The second determination value is changed based on the one of the generated heat amount-related parameter and the dissipated heat amount-related parameter.

The second failure determination threshold is determined when the other one of the generated heat amount-related parameter and the dissipated heat amount-related parameter satisfies a predetermined condition.

The second failure determination threshold is changed based on the other one of the generated heat amount-related parameter and the dissipated heat amount-related parameter.

When the failure detector detects the failure of the temperature sensor by comparing the third determination value with the third failure determination threshold, the third failure determination threshold is preferably one of the following.

The third determination value is determined when the generated heat amount-related parameter and the dissipated heat amount-related parameter both satisfy predetermined conditions.

The third determination value is changed based on the generated heat amount-related parameter and the dissipated heat amount-related parameter.

The third determination value is determined when one of the generated heat amount-related parameter and the dissipated heat amount-related parameter satisfies a predetermined condition and is changed based on the other one of the generated heat amount-related parameter and the dissipated heat amount-related parameter.

(4) The straddled vehicle of the present teaching preferably includes the following feature.

When one of the first failure determination threshold, the second determination value, the second failure determination threshold, and the third determination value is changed based on the generated heat amount-related parameter, the failure detector preferably changes the determination value or the failure determination threshold as follows.

The failure detector is configured to change the one of the first failure determination threshold, the second determination value, the second failure determination threshold, and the third determination value so as to increase when the generated heat amount-related parameter is changed so that the generated heat amount increases, and to change the one of the first failure determination threshold, the second determination value, the second failure determination threshold, and the third determination value so as to decrease when the generated heat amount-related parameter is changed so that the generated heat amount decreases.

When one of the first failure determination threshold, the second determination value, the second failure determination threshold, and the third determination value is changed based on the dissipated heat amount-related parameter, the failure detector preferably changes the determination value or the failure determination threshold as follows.

The failure detector is configured to change the one of the first failure determination threshold, the second determination value, the second failure determination threshold, and the third determination value so as to decrease when the dissipated heat amount-related parameter is changed so that the dissipated heat amount increases, and to change the one of the first failure determination threshold, the second determination value, the second failure determination threshold, and the third determination value so as to increase when the dissipated heat amount-related parameter is changed so that the dissipated heat amount to decreases.

One of the first failure determination threshold, the second determination value, the second failure determination threshold, and the third determination value is changed based on the generated heat amount-related parameter. In this case, when the generated heat amount-related parameter is changed so that the generated heat amount increases, the failure detector changes the determination value or the failure determination threshold so as to increase. Furthermore, when the generated heat amount-related parameter is changed so that the generated heat amount decreases, the failure detector changes the determination value or the failure determination threshold so as to decrease. When the generated heat amount increases, the temperature of a detection target of the temperature sensor increases. When the generated heat amount decreases, the temperature of a detection target of the temperature sensor may decrease. When the temperature of the detection target changes in accordance with a change of the generated heat amount, the failure detector changes the determination value or the failure determination threshold in accordance with the temperature change. This improves the accuracy of the detection of a failure of the temperature sensor.

One of the first failure determination threshold, the second determination value, the second failure determination threshold, and the third determination value is changed based on the dissipated heat amount-related parameter. In this case, when the dissipated heat amount-related parameter is changed so that the dissipated heat amount increases, the failure detector changes the determination value or the failure determination threshold so as to decrease. When the dissipated heat amount-related parameter is changed so that the dissipated heat amount decreases, the failure detector changes the determination value or the failure determination threshold so as to increase. When the dissipated heat amount increases, the temperature of a detection target of the temperature sensor may decrease. When the dissipated heat amount decreases, the temperature of a detection target of the temperature sensor may increase. When the temperature of the detection target changes in accordance with a change of the dissipated heat amount, the failure detector changes the determination value or the failure determination threshold in accordance with the temperature change. This improves the accuracy of the detection of a failure of the temperature sensor.

According to the present teaching, when the generated heat amount-related parameter is changed so that the generated heat amount increases, the failure detector changes the determination value or the failure determination threshold so as to increase. This, however, does not indicate that the determination value or the failure determination threshold is always changed so as to increase when the generated heat amount-related parameter is changed so that the generated heat amount increases. The determination value or the failure determination threshold may not be changed as long as the determination value or the failure determination threshold is changed so as to increase at least once when the generated heat amount-related parameter is changed so that the generated heat amount increases. This applies to similar expressions in the subject application.

(5) In the straddled vehicle of the present teaching, preferably, one of the first determination value, the second determination value, and the third determination value is derived based on a difference between two signals of the temperature sensor.

According to this arrangement, the failure detector detects a failure of the temperature sensor based on a difference between two signals of the temperature sensor. The failure detector detects a failure of the temperature sensor based on a difference between two temperatures detected by the temperature sensor. A change of the detected temperature can be grasped from the difference between the two detected temperatures. This further improves the accuracy of the detection of a failure of the temperature sensor.

(6) In the straddled vehicle of the present teaching, preferably, the dissipated heat amount-related parameter relates to at least one of a flow rate of an air flow received by the straddled vehicle, an outside temperature, and a state of wetting of the straddled vehicle.

The dissipated heat amount-related parameter relates to at least one of the flow rate of the air flow received by the straddled vehicle, the outside temperature, and the state of wetting of the straddled vehicle. The higher the flow rate of the air flow received by the straddled vehicle is, the larger the amount of heat taken away from the straddled vehicle is. The lower the outside temperature is, the larger amount of heat taken away from the straddled vehicle is. When the straddled vehicle is wet, a large amount of heat is taken away from the straddled vehicle. As such, the dissipated heat amount-related parameter significantly relates to the amount of heat taken away from the straddled vehicle. The accuracy of the detection of a failure of the temperature sensor is therefore further improved by using this dissipated heat amount-related parameter.

(7) The straddled vehicle of the present teaching preferably includes the following features.

The engine unit includes: an engine main body including a combustion chamber; and a catalyst portion including a catalyst which is configured to purify exhaust gas exhausted from the engine main body.

The temperature sensor is one of an engine temperature sensor configured to detect a temperature of the engine main body, a cooling liquid temperature sensor configured to detect a temperature of cooling liquid by which the engine main body is cooled, an intake temperature sensor configured to detect a temperature of air sucked into the engine unit, an oil temperature sensor configured to detect a temperature of lubrication oil by which the engine main body is lubricated, an exhaust gas temperature sensor configured to detect a temperature of the exhaust gas exhausted from the combustion chamber, and a catalyst temperature sensor configured to detect either a temperature of the exhaust gas inside the catalyst portion or a temperature of the catalyst.

(8) The straddled vehicle of the present teaching preferably includes the following features.

The engine unit includes: an engine main body including a combustion chamber; an oxygen sensor configured to detect oxygen density of the exhaust gas exhausted from the combustion chamber, and a fuel supplier configured to supply fuel to the combustion chamber.

The straddled vehicle includes an intake air amount acquisition unit configured to acquire an intake air amount sucked into the combustion chamber.

The at least one generated heat amount-related parameter includes one of information which relates to an engine rotation speed and is obtained based on a signal of an engine rotation speed sensor configured to detect an engine rotation speed, an engine driving time during which the engine unit is driven, information which relates to a vehicle speed and is obtained based on a signal of the vehicle speed sensor configured to detect the vehicle speed of the straddled vehicle, information which relates to an air-fuel ratio of mixture gas of air to fuel and is obtained from a signal of the oxygen sensor, information which relates to a fuel supply amount of the fuel supplier, and information which relates to an intake air amount acquired by the intake air amount acquisition unit.

When the engine rotation speed is high, a large amount of heat is generated in the engine unit. A failure of the temperature sensor is detected by using information which relates to the engine rotation speed as the generated heat amount-related parameter. Due to this, the detection of a failure of the temperature sensor is accurately executed even if the temperature of the detection target of the temperature sensor varies in accordance with the engine rotation speed.

Until some time elapses from the start of the engine unit, the longer the driving time of the engine unit is, the higher the temperature of the engine unit is. A failure of the temperature sensor is detected by using the engine driving time as the generated heat amount-related parameter. Due to this, the detection of a failure of the temperature sensor is accurately executed even if the temperature of the detection target of the temperature sensor varies in accordance with the engine driving time.

When the vehicle speed is high, the engine rotation speed is also high. Therefore, the amount of heat generated in the engine unit is considered to be large when the vehicle speed is high. A failure of the temperature sensor is detected by using information which relates to the vehicle speed as the generated heat amount-related parameter. Due to this, the detection of a failure of the temperature sensor is accurately executed even if the temperature of the detection target of the temperature sensor varies in accordance with the vehicle speed.

The engine unit includes an oxygen sensor configured to detect the oxygen density of exhaust gas exhausted from the combustion chamber. It is possible to obtain information which relates to the air-fuel ratio of mixture gas from a signal of this oxygen sensor. The information which relates to the air-fuel ratio of mixture indicates whether the air-fuel ratio of the mixture gas is rich or lean. When the air-fuel ratio is lean, air is excessive when compared to the theoretical air-fuel ratio. When the air-fuel ratio is rich, fuel is excessive when compared to the theoretical air-fuel ratio. Because the mixture gas of fuel and air burns in the combustion chamber, heat is generated in the combustion chamber. When the air-fuel ratio of the mixture gas is lean, an amount of heat generated in the combustion chamber is large when compared to cases where the air-fuel ratio is equal to the theoretical air-fuel ratio. When the air-fuel ratio of the mixture gas is rich, the amount of heat generated in the combustion chamber is small when compared to cases where the air-fuel ratio is equal to the theoretical air-fuel ratio. A failure of the temperature sensor is detected by using information which relates to the air-fuel ratio of the mixture gas as the generated heat amount-related parameter. Due to this, the detection of a failure of the temperature sensor is accurately executed even if the temperature of the detection target of the temperature sensor changes in accordance with the air-fuel ratio of the mixture gas.

The engine unit includes a fuel supplier configured to supply fuel to the combustion chamber. Because the fuel is burned, heat is generated in the combustion chamber. The amount of heat generated in the combustion chamber varies in accordance with a fuel supply amount. When the air-fuel ratio of the mixture gas is constant, the larger the fuel injection amount is, the larger the amount of heat generated in the combustion chamber is. A failure of the temperature sensor is detected by using information which relates to the fuel supply amount supplied by the fuel supplier as the generated heat amount-related parameter. Due to this, the detection of a failure of the temperature sensor is accurately executed even if the temperature of the detection target of the temperature sensor varies in accordance with the fuel supply amount supplied by the fuel supplier.

The straddled vehicle includes an intake air amount acquisition unit configured to acquire an intake air amount sucked into the combustion chamber. Because the mixture gas of fuel and air bums in the combustion chamber, heat is generated in the combustion chamber. The amount of heat generated in the combustion chamber varies in accordance with an intake air amount sucked into the combustion chamber. When the air-fuel ratio of the mixture gas is identical, the larger the intake air amount sucked into the combustion chamber is, the larger the amount of heat generated in the combustion chamber is. A failure of the temperature sensor is detected by using information which relates to the intake air amount acquired by the intake air amount acquisition unit as the generated heat amount-related parameter. Due to this, the detection of a failure of the temperature sensor is accurately executed even if the temperature of the detection target of the temperature sensor varies in accordance with the intake air amount sucked into the combustion chamber.

When the at least one generated heat amount-related parameter includes the information which relates to the engine rotation speed, the information which relates to the engine rotation speed preferably includes an engine rotation speed, an integrated value of the engine rotation speed, or a differential value of the engine rotation speed.

As described above, heat is generated in the engine unit when the engine unit is driven. When the engine rotation speed is high, a large amount of heat is generated in the engine unit. When the integrated value of the engine rotation speed is large, the total amount of heat generated in the engine unit is large. When the acceleration of the engine rotation speed is positive and high, i.e., when the differential value of the engine rotation speed is positive and large, a large amount of heat is generated in the engine unit. A failure of the temperature sensor is detected by using one of the engine rotation speed, the integrated value of the engine rotation speed, and the differential value of the engine rotation speed as the generated heat amount-related parameter. Due to this, the detection of a failure of the temperature sensor is accurately executed even if the temperature of the detection target of the temperature sensor varies in accordance with the engine rotation speed and its changes.

When the at least one generated heat amount-related parameter includes the integrated value of the engine rotation speed, the integrated value of the engine rotation speed is preferably calculated without including the engine rotation speed while the fuel cut control with which the supply of the fuel by the fuel supplier is stopped is executed and the engine rotation speed while ignition cut control with which ignition by the ignition device is stopped is executed.

While the fuel cut control with which the supply of the fuel by the fuel supplier is stopped is executed, no heat is generated by combustion. Also, while ignition cut control with which ignition by the ignition device is stopped is executed, no heat is generated by combustion. The integrated value of the engine rotation speed is calculated without including the engine rotation speed while the fuel cut control is executed and the engine rotation speed while the ignition cut control is in process. A failure of the temperature sensor is detected, by using the integrated value of the engine rotation speed calculated in this way as the generated heat amount-related parameter. Due to this, the detection of a failure of the temperature sensor is accurately executed even in the straddled vehicle which performs the fuel cut control and/or the ignition cut control.

When the at least one generated heat amount-related parameter includes the engine driving time, the engine driving time is preferably calculated without including the duration of the fuel cut control with which the supply of the fuel by the fuel supplier is stopped and the duration of the ignition cut control with which ignition by the ignition device is stopped.

While the fuel cut control with which the supply of the fuel by the fuel supplier is stopped is executed, no heat is generated by combustion. Also, while ignition cut control with which ignition by the ignition device is stopped is executed, no heat is generated by combustion. The engine driving time is calculated without including the duration of the fuel cut control and the duration of the ignition cut control. A failure of the temperature sensor is detected by using the engine driving time calculated in this way as the generated heat amount-related parameter. Due to this, the detection of a failure of the temperature sensor is accurately executed even in the straddled vehicle which performs the fuel cut control and/or the ignition cut control.

When the at least one generated heat amount-related parameter includes information which relates to the fuel supply amount of the fuel supplier, the information which relates to the fuel supply amount of the fuel supplier preferably includes a fuel supply amount per each fuel supply by the fuel supplier or the total of the fuel supply amount of the fuel supplier.

As described above, the amount of heat generated in the combustion chamber varies in accordance with a fuel supply amount. When the air-fuel ratio of the mixture gas is identical, the larger the fuel supply amount is, the larger the amount of heat generated in the combustion chamber is. The larger the total of the fuel supply amount supplied by the fuel supplier is, the amount of heat generated in the combustion chamber is. A failure of the temperature sensor is detected by using either a fuel supply amount per each fuel supply or the total of the fuel supply amount as the generated heat amount-related parameter. Due to this, the detection of a failure of the temperature sensor is accurately executed even if the temperature of the detection target of the temperature sensor varies in accordance with the fuel supply amount supplied by the fuel supplier.

(9) The straddled vehicle of the present teaching preferably includes the following features.

The engine unit includes: an engine main body including a combustion chamber; a fuel supplier configured to supply fuel to the combustion chamber; and an ignition device configured to ignite the fuel in the combustion chamber.

The at least one dissipated heat amount-related parameter includes one of information which relates to a vehicle speed and is obtained based on a signal of a vehicle speed sensor configured to detect the vehicle speed of the straddled vehicle, information which relates to rotation speed of a fan configured to generate an air flow for cooling the engine main body, a rotation time of the fan, a temperature of air detected based on a signal of an outside air temperature sensor configured to detect a temperature of air outside the engine unit or a temperature of air sucked into the engine unit, whether an idling stop by which the driving of engine unit is automatically stopped has been executed when a predetermined idling stop condition is satisfied, a duration of stop of the engine unit due to the idling stop, a duration of fuel cut control by which supply of the fuel by the fuel supplier is stopped, and a duration of ignition cut control by which ignition by the ignition device is stopped.

When the vehicle speed is high, a large amount of heat is taken away from the straddled vehicle by an air flow. A failure of the temperature sensor is detected by using information which relates to the vehicle speed as the dissipated heat amount-related parameter. Due to this, the detection of a failure of the temperature sensor is accurately executed even if the temperature of the detection target of the temperature sensor varies in accordance with the vehicle speed.

The straddled vehicle may include a fan which is configured to generate an air flow for cooling the engine main body. Heat is taken away from the engine main body by the air flow generated by the rotation of the fan. When the rotation speed of the fan is high, a large amount of heat is taken away from the engine unit. A failure of the temperature sensor is detected by using information which relates to the rotation speed of the fan as the dissipated heat amount-related parameter. Due to this, the detection of a failure of the temperature sensor is accurately executed even if the temperature of the detection target of the temperature sensor varies in accordance with the rotation of the fan.

When the rotation time of the fan is long, the total amount of heat taken away from the engine unit is large. A failure of the temperature sensor is detected by using the rotation time of the fan as the dissipated heat amount-related parameter. Due to this, the detection of a failure of the temperature sensor is accurately executed even if the temperature of the detection target of the temperature sensor varies in accordance with the rotation time of the fan.

The straddled vehicle may include an outside temperature sensor. The outside temperature sensor is configured to detect a temperature of air outside the engine unit or a temperature of air sucked into the engine unit. The outside temperature varies depending on the area, season, and so on. The lower the outside temperature is, the larger the amount of heat taken away from the straddled vehicle to the atmosphere is. A failure of the temperature sensor is detected by using a temperature of air detected based on a signal of the temperature sensor as the dissipated heat amount-related parameter. Due to this, the detection of a failure of the temperature sensor is accurately executed even if the temperature of the detection target of the temperature sensor varies in accordance with the outside temperature.

The straddled vehicle may execute idling stop with which the driving of the engine unit is stopped without an operation to stop the driving of the engine unit. The vehicle speed is considered to be zero when the driving of the engine unit is stopped by the idling stop. Therefore, when the idling stop has been executed, a small amount of heat is taken away from the straddled vehicle by an air flow. A failure of the temperature sensor is detected by using whether the idling stop has been executed as the dissipated heat amount-related parameter. Due to this, the detection of a failure of the temperature sensor is accurately executed even in the straddled vehicle which executes the idling stop.

Furthermore, the longer the duration of stop of the engine unit due to the idling stop is, the smaller the amount of heat taken away from the straddled vehicle by an air flow is. A failure of the temperature sensor is detected by using the duration of stop of the engine unit due to the idling stop as the dissipated heat amount-related parameter. Due to this, the detection of a failure of the temperature sensor is accurately executed even in the straddled vehicle which executes the idling stop.

The straddled vehicle includes a fuel supplier configured to supply fuel to the combustion chamber. The straddled vehicle may execute fuel cut control to stop the supply of fuel by the fuel supplier. No power is generated by the engine unit during the execution of the fuel cut control. Therefore, the longer the duration of the fuel cut control is, the lower the vehicle speed is. To put it differently, the longer the duration of the fuel cut control is, the smaller the amount of heat taken away from the straddled vehicle by an air flow is. A failure of the temperature sensor is detected by using the duration of the fuel cut control as the dissipated heat amount-related parameter. Due to this, the detection of a failure of the temperature sensor is accurately executed even in the straddled vehicle which performs the fuel cut control.

The straddled vehicle includes an ignition device configured to ignite fuel in the combustion chamber. The straddled vehicle may execute ignition cut control to stop the ignition of fuel by the ignition device. No power is generated by the engine unit during the execution of the ignition cut control. Therefore, the longer the duration of the ignition cut control is, the lower the vehicle speed is. To put it differently, the longer the duration of the ignition cut control is, the smaller the amount of heat taken away from the straddled vehicle by an air flow is. A failure of the temperature sensor is detected by using the duration of the ignition cut control as the dissipated heat amount-related parameter. Due to this, the detection of a failure of the temperature sensor is accurately executed even in the straddled vehicle which performs the ignition cut control.

According to the present teaching, the fan configured to generate an air flow for cooling the engine main body may be a fan configured to generate an air flow toward the engine main body or a fan which is configured to indirectly cool the engine main body by generating an air flow toward a radiator by which cooling liquid flowing in the engine main body is cooled.

When the at least one dissipated heat amount-related parameter includes information which relates to the rotation speed of the fan, the information which relates to the rotation speed of the fan preferably includes the rotation speed of the fan, an integrated value of the rotation speed of the fan, or a differential value of the rotation speed of the fan.

As described above, when the straddled vehicle includes a fan which is configured to generate an air flow for cooling the engine main body, heat is taken away from the engine main body by the rotation of the fan. When the rotation speed of the fan is high, a large amount of heat is taken away from the engine unit. when the integrated value of the rotation speed of the fan is large, the total amount of heat taken away from the engine unit is large. When the acceleration of the fan is positive and high, i.e., when the differential value of the rotation speed of the fan is positive and large, a large amount of heat is generated in the engine unit. A failure of the temperature sensor is detected by using one of the rotation speed of the fan, the integrated value of the rotation speed of the fan, and the differential value of the rotation speed of the fan as the dissipated heat amount-related parameter. Due to this, the detection of a failure of the temperature sensor is accurately executed even if the temperature of the detection target of the temperature sensor varies in accordance with the rotation of the fan.

(10) The straddled vehicle of the present teaching preferably includes the following features.

The engine unit includes a crankshaft.

The straddled vehicle includes: a gearbox which is configured to transmit rotation of the crankshaft to a driving wheel and includes a plurality of gear positions; and a gear position acquisition unit which is configured to acquire gear position information indicating the current gear position of the gearbox.

The at least one dissipated heat amount-related parameter includes the gear position information of the gearbox, which is acquired by the gear position acquisition unit.

According to this arrangement, the straddled vehicle includes a gearbox. The gearbox has a plurality of gear positions. The gearbox transmits the rotation of the crankshaft to the driving wheel at multiple transmission ratios. Each transmission ratio corresponds to a gear position. The straddled vehicle includes a gear position acquisition unit. The gear position acquisition unit is configured to acquire gear position information indicating the current gear position of the gearbox. The vehicle speed is varied in accordance with the gear position. The higher the vehicle speed is, the larger the amount of heat taken away from the straddled vehicle by an air flow is. A failure of the temperature sensor is detected by using the gear position of the gearbox acquired by the gear position acquisition unit as the dissipated heat amount-related parameter. Due to this, the detection of a failure of the temperature sensor is accurately executed even if the temperature of the detection target of the temperature sensor varies in accordance with the gear position of the gearbox.

(11) The straddled vehicle of the present teaching preferably includes the following features.

The straddled vehicle includes: an engine controlling unit configured to control the engine unit; a battery configured to store power supplied to the failure detector and the engine controlling unit; and a main switch which is turned on to supply the power from the battery to the engine control unit and is turned off to stop supply of the power from the battery to the engine controlling unit.

The failure detector determines if there is the failure of the temperature sensor when the main switch is turned on and does not determine if there is the failure of the temperature sensor when the main switch is turned off.

According to this arrangement, the straddled vehicle includes an engine controlling unit, a battery, and a main switch. The engine controlling unit is configured to control the driving of the engine unit. The battery stores power supplied to the failure detector and the engine controlling unit. The main switch is turned on to supply the power from the battery to the engine controlling unit. The main switch is turned off to stop the supply of the power from the battery to the engine controlling unit. The temperature sensor failure detector determines whether there is a failure in the temperature sensor when the main switch is turned on, and do not determine whether there is a failure in the temperature sensor when the main switch is turned off. To put it differently, the temperature sensor failure detector detects a failure of the temperature sensor only when the power is supplied from the battery to the engine controlling unit. It is therefore unnecessary to supply the power from the battery to the failure detector for failure detection when the power is not supplied from the battery to the engine controlling unit. The consumption of the power stored in the battery is restrained for this reason.

### [Brief Description of Drawings]

[FIG. 1] FIG. 1 is a right side view of a motorcycle of First Embodiment.
[FIG. 2] FIG. 2 is a control block diagram of the motorcycle of FIG. 1.
[FIG. 3] FIG. 3 is a schematic diagram of an engine unit of the motorcycle of FIG. 1.
[FIG. 4] FIG. 4 is a cross section of a gearbox of the motorcycle of FIG. 1.
[FIG. 5] FIG. 5 is a graph showing the relationship between a temperature detected by a coolant water temperature sensor and an integrated value of an engine rotation speed.
[FIG. 6] FIG. 6 is a left side view of a motorcycle of a modification.
[FIG. 7] FIG. 7 is a left side view of a motorcycle of a modification.
[FIG. 8] FIG. 8 is a cross section of an engine main body, a shroud, and a fan of the motorcycle shown in FIG. 7.

### [Description of Embodiments]

### <First Embodiment>

The following describes First Embodiment of the present teaching. A motorcycle 1 of the present embodiment is an example of a straddled vehicle of the present teaching. Hereinafter, a front-rear direction is a vehicle front-rear direction for a rider seated on a below-described seat 9 of the motorcycle 1. A left-right direction is a vehicle left-right direction for the rider seated on the seat 9. The vehicle left-right direction is identical to a vehicle width direction. In each figure related to First Embodiment and later-described other embodiments, arrows F, B, U, D, L, and R indicate forward, rearward, upward, downward, leftward, and rightward, respectively.

### [1] Overall Structure of Motorcycle

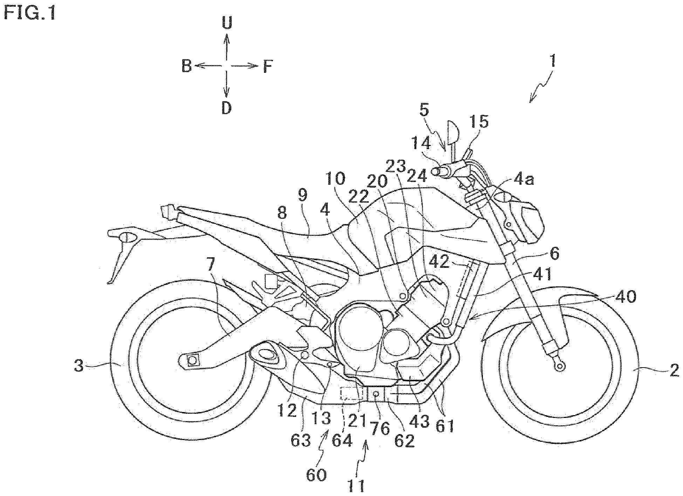

As shown in FIG. 1, the motorcycle 1 includes a front wheel 2, a rear wheel 3, and a vehicle body frame 4. The vehicle body frame 4 includes a head pipe 4a at a front portion. A steering shaft (not illustrated) is rotatably inserted into the head pipe 4a. An upper end portion of the steering shaft is connected to a handle unit 5. An upper end portion of a pair of front forks 6 is fixed to the handle unit 5. The lower end portions of the front forks 6 support the front wheel 2.

The vehicle body frame 4 swingably supports a pair of swingarms 7. The rear end portions of the swingarms 7 support the rear wheel 3. Each swingarm 7 is connected, at a portion rearward of the swing center, to the vehicle body frame 4 via a rear suspension 8.

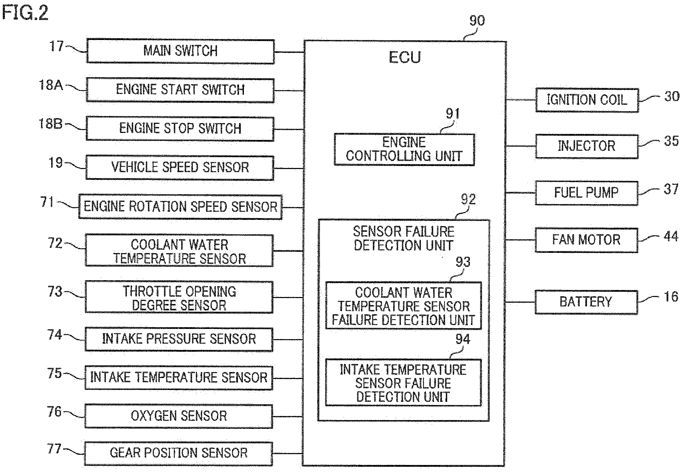

The vehicle body frame 4 supports the seat 9 and a fuel tank 10. The fuel tank 10 is provided in front of the seat 9. The vehicle body frame 4 supports the engine unit 11. The engine unit 11 is provided straight below the seat 9 and the fuel tank 10. The vehicle body frame 4 supports a battery 16 (see FIG. 2). The battery 16 supplies electric power to electronic devices such as an ECU 90 and sensors which will be described later.

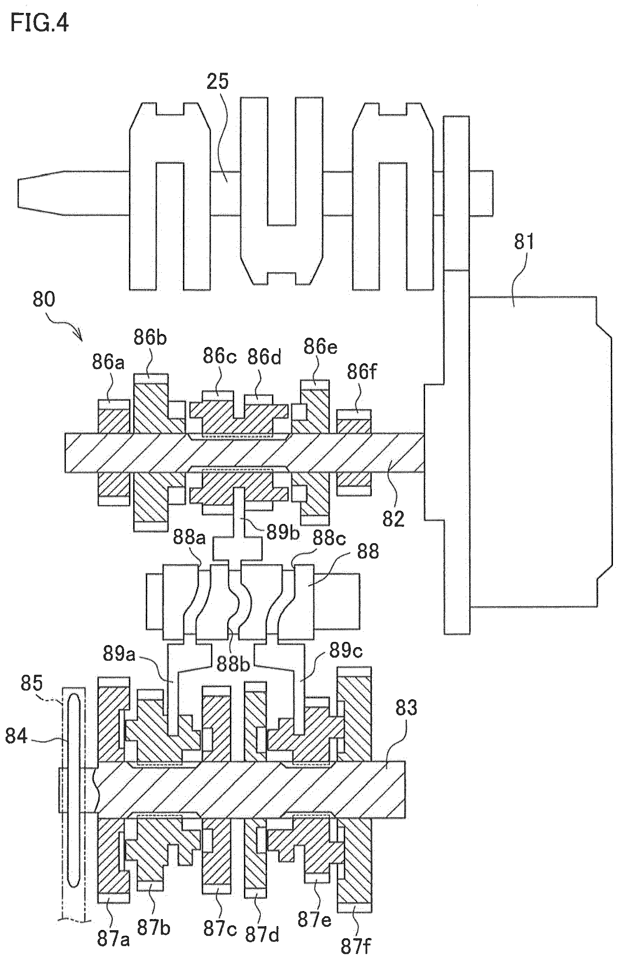

The motorcycle 1 includes footrests 12 at lower left and right portions. A brake pedal 13 is provided in front of the right footrest 12. When the rider operates the brake pedal 13, the rotation of the rear wheel 3 is braked. A shift pedal which is not illustrated is provided in front of the left footrest 12. This shift pedal is operated when the gear position of a later-described gearbox 80 (see FIG. 4) is changed. Alternatively, a shift switch may be provided on the handle unit 5 in place of the shift pedal.

The handle unit 5 includes a throttle grip 14, a brake lever (not illustrated), and a clutch lever (not illustrated). The throttle grip 14 is operated for adjusting the output of the engine. The brake lever is operated for braking the rotation of the front wheel 2. This clutch lever is operated when power transmission by a later-described clutch 81 (see FIG. 4) of the gearbox 80 is cut off.

Various types of switches operated by the rider are provided on the handle unit 5. As shown in FIG. 2, the switches include a main switch 17, an engine start switch 18A, and an engine stop switch 18B. The main switch 17 is a key switch operated by a key, for example. When the main switch 17 is turned on, electric power stored in the battery 16 is supplied to electronic components such as the ECU 90 and sensors. When the main switch 17 is turned off, the power supply from the battery 16 to the ECU 90 is stopped. A time from the switch-off of the main switch 17 to the stop of the power supply is different between the electric components. Even after the main switch 17 is turned off, the electric power is continuously supplied to the ECU 90 for a predetermined time. The engine start switch 18A is operated to start the engine unit 11. The engine stop switch 18B switch is operated to stop the driving of the engine unit 11.

As shown in FIG. 1, the motorcycle 1 includes a display 15. The display 15 is attached to the handle unit 5. The display 15 is positioned to be viewable by the rider seated on the seat 9. The display 15 may not be attached to the handle unit 5. The display 15 is configured to display vehicle speed, engine rotation speed, gear position, warnings, and the like. As shown in FIG. 2, the motorcycle 1 includes a vehicle speed sensor 19 which is configured to detect the running speed (vehicle speed) of the motorcycle 1.

### [2] Structure of Engine Unit

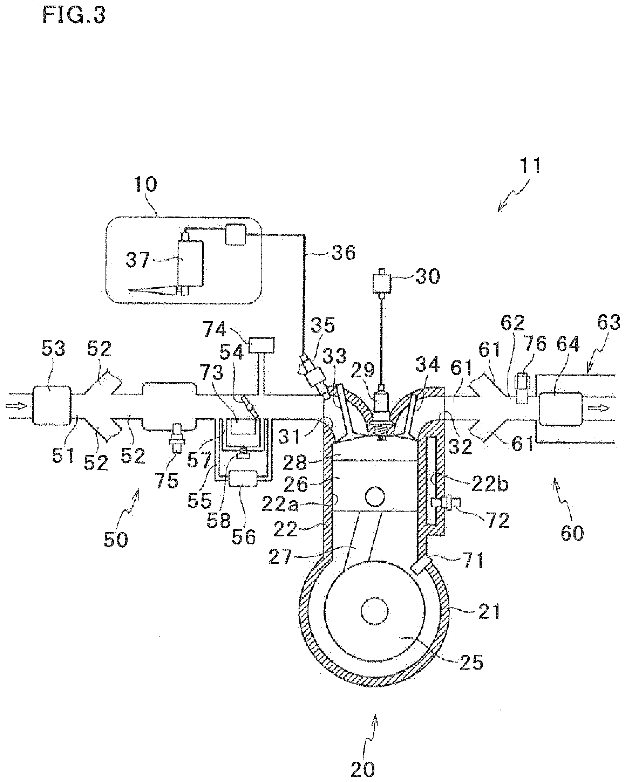

As shown in FIG. 1 and FIG. 3, the engine unit 11 includes an engine main body 20. The engine unit 11 further includes a water cooling unit 40 (see FIG. 1), an intake unit 50 (see FIG. 3), and an exhaust unit 60 (see FIG. 1 and FIG. 3). The engine unit 11 is a water-cooled engine. The engine unit 11 is a three-cylinder engine including three cylinders. The engine unit 11 is a four-stroke single-cycle engine. The four-stroke single-cycle engine repeats, in each cylinder, an intake process, a compression process, a combustion process (expansion process), and an exhaust process. The combustion process in the three-cylinder engine is performed at different timings in the respective three cylinders. As shown in FIG. 1, a part of the engine unit 11 is exposed to the outside when viewed in the left-right direction. To be more specific, when viewed in the left-right direction, a part of the engine main body 20, the exhaust unit 60, and a part of the water cooling unit 40 are exposed to the outside.

Hot coolant water, which has absorbed the heat of the engine main body 20, is sent to the water cooling unit 40. The water cooling unit 40 cools the coolant water sent from the engine main body 20 and returns the water to the engine main body 20. While in the present embodiment a cooling medium for cooling the engine main body 20 is water, liquid other than water may be used as the cooling medium. As shown in FIG. 1, the water cooling unit 40 includes a radiator 41, a radiator fan 42, a reserve tank 43, and a water pump (not illustrated). The radiator 41 is provided in front of an upper part of the engine main body 20. The radiator fan 42 is provided between the radiator 41 and the engine main body 20. As the radiator fan 42 is driven, an air flow passes through the radiator 41. The coolant water flowing in the radiator 41 is cooled by the air flow passing through the radiator 41. The radiator fan 42 generates an air flow for cooling the radiator 41. The reserve tank 43 is provided in front of a right part of the engine main body 20 and temporarily stores the coolant water. The water pump is driven by the crankshaft 25. The radiator fan 42 is driven by a fan motor 44 (see FIG. 2). The fan motor 44 is controlled by a later-described ECU 90. The radiator fan 42 may be driven by the crankshaft 25. Alternatively, the radiator fan 42 may be switchable between a state of being driven by the crankshaft 25 and a state of being driven by the fan motor 44. The radiator fan 42 is equivalent to a "fan configured to generate an air flow for cooling an engine main body" of the present teaching.

As shown in FIG. 1, the engine main body 20 includes a crankcase 21, a cylinder body 22, a cylinder head 23, and a head cover 24. The cylinder body 22 is attached to an upper end portion of the crankcase 21. The cylinder head 23 is attached to an upper end portion of the cylinder body 22. The head cover 24 is attached to an upper end portion of the cylinder head 23.

As shown in FIG. 3, the crankcase 21 houses the crankshaft 25. FIG. 3 shows only one of the three cylinders of the engine main body 20 and does not show the remaining two cylinders. The engine unit 11 includes an engine rotation speed sensor 71 (see FIG. 2 and FIG. 3). The engine rotation speed sensor 71 detects the rotation speed of the crankshaft 25, i.e., the engine rotation speed. The engine rotation speed indicates the rotation number of the crankshaft 25 per unit time.

The crankcase 21 houses a gearbox (transmission) 80 shown in FIG. 4. The gearbox 80 transmits power of the crankshaft 25 to the rear wheel (driving wheel) 3. The gearbox 80 transmits the rotation of the crankshaft 25 to the rear wheel 3 at multiple transmission ratios. It is noted that FIG. 4 is not a cross section cut along a single plane. FIG. 4 is a cross section passing the crankshaft 25 and a main shaft 82, a drive shaft 83, and a shift cam 88 of the gearbox 80, which will be described below. In FIG. 4, however, the crankshaft 25 and the shift cam 88 are not cross sections but profiles.

The gearbox 80 includes the clutch 81, the main shaft 82, and the drive shaft 83. The main shaft 82 and the drive shaft 83 are arranged to be in parallel to the crankshaft 25. A sprocket 84 is provided to the drive shaft 83. The sprocket 84 is connected to the rear wheel 3 via a chain 85. The clutch 81 is provided to the main shaft 82. The clutch 81 is switchable between a connection state in which the rotation of the crankshaft 25 is transmitted to the main shaft 82 and a cut-off state in which the rotation is not transmitted. The clutch 81 is a typical clutch such as a friction clutch. The structure of the clutch 81 is not detailed.

Six shift gears 86a, 86b, 86c, 87d, 86e, and 86f are provided to the main shaft 82. Six shift gears 87a, 87b, 87c, 87d, 87e, and 87f are provided to the drive shaft 83. The six shift gears 86a to 86f of the main shaft 82 are engaged with the six shift gears 87a to 87f of the drive shaft 83, respectively. The shift gears 86b and 86e are provided to the main shaft 82 so as to idle. The shift gears 87b and 87e respectively engaged with the shift gears 86b and 86e are arranged to rotate together with the drive shaft 83. The shift gears 87a, 87c, 87d, and 87f are provided to the drive shaft 83 so as to idle. The shift gears 87a, 87c, 87d, and 87f respectively engaged with the shift gears 86a, 86c, 86d, and 86f are arranged to rotate together with the main shaft 82.

The shift gears 86c and 86d are provided to the main shaft 82 to be movable in the axial direction. The shift gears 86c and 86d are connected to each other and move together in the axial direction. The shift gears 87b and 87e are provided to the drive shaft 83 to be movable in the axial direction. Hereinafter, the shift gears 86c, 86d, 87b, and 87e will be referred to as movable shift gears. A side face of the movable shift gear 86c can be engaged with a side face of the shift gear 86b which faces the movable shift gear 86c in the axial direction. A side face of the movable shift gear 86d can be engaged with a side face of the shift gear 86e which faces the movable shift gear 86d in the axial direction. The side faces of the movable shift gear 87b can be engaged with the side faces of the shift gears 87a and 87c which face the movable shift gear 87b in the axial direction. The side faces of the movable shift gear 87e can be engaged with the side faces of the shift gears 87d and 87f which face the movable shift gear 87e in the axial direction. When the clutch 81 is in the connection state and a movable shift gear is engaged with a shift gear facing the movable shift gear in the axial direction, these two shift gears rotate together. As a result, the rotation of the main shaft 82 is transmitted to the drive shaft 83. The ratio of the rotation speed of the main shaft 82 to the rotation speed of the drive shaft 83 varies depending on which pair of shift gears are engaged. The ratio of the rotation speed of the main shaft 82 to the rotation speed of the drive shaft 83 is termed a transmission ratio of the gearbox 80. The gearbox 80 of the present embodiment has six gear positions corresponding to six transmission ratios, respectively. For example, when the movable shift gear 87e is engaged with the shift gear 87d, the rotation of the main shaft 82 is transmitted to the drive shaft 83 via the shift gears 86d, 87d, and 87e. The transmission ratio of the gearbox 80 in this case corresponds to the gear ratio of the shift gear 86d to the shift gear 87d. The gear ratio is a ratio of the number of teeth of a gear to the number of teeth of another gear. When none of the movable shift gears is engaged with the transmission gears lined up in the axial direction, the rotation of the main shaft 82 is not transmitted to the drive shaft 83. This state indicates that the gear position of the gearbox 80 is in a neutral position. The gearbox 80 of the present embodiment has seven gear positions constituted by gear positions which are the first speed to the sixth speed and one neutral position. In other words, the gearbox 80 has seven switchable gear positions.

The gearbox 80 has the shift cam 88 and three shift forks 89a, 89b, and 89c as a mechanism for moving the movable shift gears 86c, 86d, 87b, and 87e in the axial direction. The shift cam 88 is substantially cylindrical in shape. The shift cam has three annular cam grooves 88a, 88b, and 88c in an outer circumferential surface. One end portions of the three shift forks 89a to 89c are inserted into the three cam grooves 88a to 88c, respectively. The other end portion of the shift fork 89b is engaged with the outer circumferential surfaces of the movable shift gears 86c and 86d. The other end portions of the shift forks 89a and 89c are engaged with the outer circumferential surfaces of the movable shift gears 87b and 87e, respectively. Because the shift cam 88 rotates, the shift forks 89a to 89c move in the axial direction along the cam grooves 88a to 88c, respectively. With this, the movable shift gears 86c, 86d, 87b, and 87e move in the axial direction and the gear position of the gearbox 80 is changed. The shift cam 88 is driven by an unillustrated shift actuator. When the rider operates the shift pedal (not illustrated), the shift actuator is controlled by the later-described ECU 90. As a result, the rotation of the shift cam 88 is controlled. The engine unit 11 includes a gear position sensor 77 (see FIG. 2). The gear position sensor 77 is configured to detect the gear position of the gearbox 80 based on the rotational position of the shift cam 88. The gear position sensor 77 detects that the gear position of the gearbox 80 is one of the six gear positions which are the first speed to the sixth speed and the neutral position.

Although not illustrated, the crankcase 21 includes a starter motor and a generator. The starter motor and the generator are connected to the crankshaft 25. The starter motor is driven by power from the battery 16. The starter motor rotates the crankshaft 25 at the start of the engine unit 11. The generator generates power by the rotational force of the crankshaft 25. The battery 16 is charged with the generated power. The starter motor and the generator may be integrated.

The crankcase 21 includes, at a lower portion, an oil pan (not illustrated) which stores lubrication oil. The crankcase 21 houses an oil pump (not illustrated). The oil pump sucks the lubrication oil stored in the oil pan. The lubrication oil is conveyed by a pressure from the oil pump and circulates in the engine main body 20.

Three cylinder holes 22a (see FIG. 3) are formed in the cylinder body 22. The three cylinder holes 22a are side by side in the left-right direction. A piston 26 is slidably housed in each cylinder hole 22a. The three pistons 26 are connected to a single crankshaft 25 via three connecting rods 27. In the cylinder body 22, a cooling passage 22b is provided around the three cylinder holes 22a to allow the coolant water to flow in the cooling passage 22b. The engine unit 11 includes a coolant water temperature sensor 72 configured to detect the temperature of the coolant water in the cooling passage 22b. The coolant water temperature sensor 72 is equivalent to a cooling liquid temperature sensor of the present teaching. The coolant water temperature sensor 72 outputs a voltage signal corresponding to the temperature of the coolant water which is a detection target. It is possible to grasp the temperature of the cylinder body 22 based on the temperature of the coolant water detected by the coolant water temperature sensor 72. In other words, the coolant water temperature sensor 72 indirectly detects the temperature of the engine main body 20.

A combustion chamber 28 is formed by a lower surface of the cylinder head 23, a cylinder hole 22a, and a piston 26. The engine main body 20 includes three combustion chambers 28. A leading end portion of an ignition plug 29 is provided in the combustion chamber 28. The ignition plug 29 is configured to ignite a mixture gas of fuel and air in the combustion chamber 28. The ignition plug 29 is connected to an ignition coil 30. The ignition coil 30 stores electric power to cause spark discharge of the ignition plug 29. The ignition plug 29 and the ignition coil 30 constitute an ignition device of the present teaching.

The cylinder head 23 includes an intake passage member 31 for each combustion chamber 28 and an exhaust passage member 32 for each combustion chamber 28. In this specification, a passage member is a structure forming a path. A path is a space through which gas or the like passes. The intake passage member 31 is provided to introduce air into the combustion chamber 28. The exhaust passage member 32 is provided to exhaust combustion gas (exhaust gas) generated in the combustion chamber 28 during a combustion process. An opening on the combustion chamber 28 side of the intake passage member 31 is opened and closed by an intake valve 33. An opening on the combustion chamber 28 side of the exhaust passage member 32 is opened and closed by an exhaust valve 34. The intake valve 33 and the exhaust valve 34 are actuated by a valve driving device (not illustrated). The valve driving device operates in sync with the crankshaft 25.

As shown in FIG. 3, the intake unit 50 includes an intake passage member 51 and three branched intake passage members 52. One end of the intake passage member 51 is open to the atmosphere. The other end of the intake passage member 51 is connected to the three branched intake passage members 52. An air filter 53 is provided in the intake passage member 51. The three branched intake passage members 52 are connected to three intake passage members 31 of the cylinder head 23, respectively. Air taken from the one end of the intake passage member 51 is supplied to the engine main body 20 via the three branched intake passage members 52.

The engine unit 11 includes an injector 35 which is configured to supply fuel to the combustion chamber 28. The injector 35 is positioned to inject fuel in the intake passage member 31 of the cylinder head 23 or the branched intake passage member 52. The injector 35 may be positioned to inject fuel in the combustion chamber 28. The injector 35 is provided for each combustion chamber 28. The injector 35 is connected to a fuel tank 10 via a fuel hose 36. A fuel pump 37 is provided inside the fuel tank 10. The fuel pump 37 supplies fuel from the fuel tank 10 to the fuel hose 36 with a pressure.

A throttle valve 54 is provided in the branched intake passage member 52. The throttle valve 54 is connected to the throttle grip 14 by an unillustrated throttle wire. The opening degree of the throttle valve 54 is changed as the rider rotationally operates the throttle grip 14. Hereinafter, the opening degree of the throttle valve 54 will be referred to as a throttle opening degree. The throttle valve 54 may be an electronic throttle valve which is provided such that the opening degree is controlled by the ECU 90. In this case, a throttle sensor is provided to detect how much the throttle grip 14 is turned. The ECU 90 controls the opening degree of the throttle valve 54 based on a signal of the throttle sensor.

The intake unit 50 includes a first bypass passage member 55 for each branched intake passage member 52. The first bypass passage member 55 is connected to the branched intake passage member 52 while bypassing the throttle valve 54. A first bypass valve 56 is provided inside the first bypass passage member 55. The flow rate of the air flowing in the first bypass passage member 55 is adjusted by the first bypass valve 56. Switching of the first bypass valve 56 is controlled by the later-described ECU 90. The intake unit 50 includes a second bypass passage member 57 for each branched intake passage member 52. The second bypass passage member 57 is connected to the branched intake passage member 52 while bypassing the throttle valve 54. A second bypass valve 58 is provided inside the second bypass passage member 57. The flow rate of the air flowing in the second bypass passage member 57 is adjusted by the second bypass valve 58. The second bypass valve 58 is manually operated. The second bypass valve 58 is formed of, for example, an adjusting screw.

A throttle opening degree sensor (throttle position sensor) 73, an intake pressure sensor 74, and an intake temperature sensor 75 are provided in the branched intake passage member 52. The throttle opening degree sensor 73 is configured to detect the position of the throttle valve 54 so as to output a signal indicating the opening degree of the throttle valve 54. The intake pressure sensor 74 is configured to detect the pressure in the branched intake passage member 52. To be more specific, the intake pressure sensor 74 outputs a voltage signal corresponding to the intake pressure of the branched intake passage member 52. The intake temperature sensor 75 is configured to detect the temperature of air in the branched intake passage member 52. To be more specific, the intake temperature sensor 75 outputs a voltage signal corresponding to the temperature of the air in the branched intake passage member 52.

As shown in FIG. 1 and FIG. 3, the exhaust unit 60 includes three independent exhaust passage members 61, a collective exhaust passage member 62, and a muffler member 63. The three independent exhaust passage members 61 are connected to three exhaust passage members 32 of the cylinder head 23, respectively. The other ends of the three independent exhaust passage members 61 are connected to one end of the collective exhaust passage member 62. The other end of the collective exhaust passage member 62 is connected to the muffler member 63. The muffler member 63 is a device for reducing noise generated by exhaust gas. The muffler member 63 houses a catalyst 64 which purifies exhaust gas. The muffler member 63 is equivalent to a catalyst portion of the present teaching. The exhaust gas discharged from the three exhaust passage members 32 of the engine main body 20 passes the three independent exhaust passage members 61 and the collective exhaust passage member 62 and then flows into the muffler member 63. The exhaust gas having flown into the muffler member 63 is purified by the catalyst 64 and is then discharged to the atmosphere.

The catalyst 64 is a three-way catalyst. The three-way catalyst removes three substances in exhaust gas, namely hydrocarbon (HC), carbon monoxide (CO), and nitrogen oxide (NOx), by oxidation or reduction. The catalyst 64 may be a catalyst other than the three-way catalyst. The catalyst 64 has a structure such that noble metal having exhaust gas purification capability is mounted on a catalyst carrier. The catalyst 64 of the present embodiment is a metal-carrier catalyst in which the carrier is made of metal. The catalyst 64 may be a ceramic-carrier catalyst in which the carrier is made of ceramic.

As shown in FIG. 1 and FIG. 3, an oxygen sensor 76 is provided on the collective exhaust passage member 62. The oxygen sensor 76 is configured to detect the oxygen density in the exhaust gas. The oxygen sensor 76 of the present embodiment is configured to output a voltage signal corresponding to the oxygen density in the exhaust gas. The oxygen sensor 76 outputs a signal with a high voltage value when the air-fuel ratio of the mixture gas is rich, and outputs a signal with a low voltage value when the air-fuel ratio is lean. The "rich" state indicates a state in which fuel is excessive as compared to the target air-fuel ratio. The "lean" state indicates a state in which air is excessive as compared to the target air-fuel ratio. To put it differently, the oxygen sensor 76 detects if the air-fuel ratio of the air-fuel mixture is in the rich state or the lean state. The oxygen sensor 76 may be a linear A/F sensor which is configured to output a linear detection signal corresponding to the oxygen density in the exhaust gas. The linear A/F sensor is configured to continuously detect changes of the oxygen density in the exhaust gas.

### [3] Structure of ECU

The motorcycle 1 includes the ECU (Electronic Control Unit) 90 which is configured to control the components of the motorcycle 1. As shown in FIG. 2, the ECU 90 is connected to sensors such as a vehicle speed sensor 19, an engine rotation speed sensor 71, a coolant water temperature sensor 72, a throttle opening degree sensor 73, an intake pressure sensor 74, an intake temperature sensor 75, an oxygen sensor 76, and a gear position sensor 77. Furthermore, the ECU 90 is connected to switches provided on the handle unit 5, such as a main switch 17, an engine start switch 18A, and an engine stop switch 18B, and a display 15 (see FIG. 1). Furthermore, the ECU 90 is connected to the ignition coil 30, the injector 35, the fuel pump 37, the fan motor 44, the starter motor (not illustrated), and the battery 16 (not illustrated).

The ECU 90 includes members such as a CPU (Central Processing Unit), a ROM (Read Only Memory), and a RAM (Random Access Memory). The CPU performs information processing based on programs and data stored in the ROM and the RAM. As shown in FIG. 2, the ECU 90 includes, as function processors, an engine controlling unit 91 configured to control the engine unit 11 and a sensor failure detection unit 92 configured to detect a failure of sensors. The sensor failure detection unit 92 includes a coolant water temperature sensor failure detection unit 93 and an intake temperature sensor failure detection unit 94. When the sensor failure detection unit 92 detects a failure of a sensor, the ECU 90 causes the display 15 to display a warning. The ECU 90 may be a single device provided at a single position or may be formed of a plurality of devices which are positionally separated from one another. For example, a device constituting the engine controlling unit 91 may be remote from a device constituting the sensor failure detection unit 92. The coolant water temperature sensor failure detection unit 93 and the intake temperature sensor failure detection unit 94 are equivalent to temperature sensor failure detectors of the present teaching, respectively. The engine controlling unit 91 is equivalent to an engine controlling unit of the present teaching.

When the engine start switch 18A is switched on, the engine controlling unit 91 starts the engine unit 11 by driving the starter motor. The engine controlling unit 91 drives the fuel pump 37 and the injector 35 based on signals from the sensors 71 to 77 and the like, so as to control the fuel injection amount of the injector 35. To be more specific, the fuel injection amount is controlled by controlling a fuel injection time. The injector 35 is equivalent to a fuel supplier of the present teaching. The fuel injection amount is equivalent to a fuel supply amount of the present teaching. The engine controlling unit 91 controls electric conduction to the ignition coil 30 based on signals from the sensors 71 to 77 and the like, so as to control an ignition timing. The ignition timing indicates a timing at which the ignition plug 29 discharges electricity. When the engine stop switch 18B is switched on, the engine controlling unit 91 stops the electric conduction to the ignition coil 30, and stops the fuel injection from the injector 35 to stop the driving of the engine unit 11.

To improve the combustion efficiency and the purification efficiency of the catalyst 64, the air-fuel ratio of the mixture gas in the combustion chamber 28 is preferably equal to the theoretical air-fuel ratio (stoichiometry). The engine controlling unit 91 basically controls the air-fuel ratio of the mixture gas to be around the theoretical air-fuel ratio, and increases or decreases the fuel injection amount according to need. For example, from a cold start to the completion of warm up of the engine unit 11, the fuel injection amount is arranged to be large as compared to the normal state. The cold start of the engine unit 11 indicates that the engine unit 11 is started in a state that the temperature of the engine main body 20 is equal to or lower than the outside temperature. The warm up is a state that the temperature of the engine main body 20 is higher than a predetermined temperature. In acceleration, the output of the engine unit 11 is increased as the fuel injection amount is increased. In deceleration, the fuel injection amount is decreased. Furthermore, when a predetermined fuel cut condition is satisfied, the engine controlling unit 91 executes fuel cut control to temporarily stop the fuel injection from the injector 35. The fuel cut condition is, for example, a case where the engine rotation speed is equal to or higher than a predetermined rotation speed and the throttle opening degree is equal to or smaller than a predetermined opening degree. The engine controlling unit 91 executes ignition cut control to stop the ignition by the ignition plug 29 by cutting power supply to the ignition coil 30. The ignition cut control is executed when the fuel cut control is executed. The ignition cut control, however, is not always executed when the fuel cut control is executed.

When a predetermined idling stop condition is satisfied while the engine unit 11 is driven, the engine controlling unit 91 automatically stops the driving of the engine unit 11. An operation to stop the driving of the engine unit 11 when the predetermined idling stop condition is satisfied is termed idling stop. A state in which the engine unit 11 is stopped by the idling stop is termed an idling stop state. The idling stop condition is, for example, a condition in which all of the following conditions A1 to A5 continue for a predetermined time (e.g., three seconds).
A1: The throttle opening degree is equal to or smaller than a predetermined opening degree (e.g., 0.3 degree).
A2: The vehicle speed is equal to or lower than a predetermined speed (e.g., 3km/h or lower).
A3: The engine rotation speed is equal to or lower than a predetermined rotation speed (e.g., 2000rpm or lower).
A4: The temperature of the coolant water is equal to or higher than a predetermined temperature (e.g., 60 degrees centigrade).
A5: The remaining life of the battery 16 is equal to or longer than a predetermined value.

In the idling stop state, the engine controlling unit 91 re-starts the engine unit 11 when a predetermined re-start condition is satisfied. The re-start condition is, for example, a condition in which the throttle opening degree is equal to or larger than a predetermined opening degree.

The engine controlling unit 91 controls the radiator fan 42 by driving the fan motor 44 based on signals from sensors such as the vehicle speed sensor 19 and the coolant water temperature sensor 72.

### [4] Detection of Failure of Temperature Sensor

### [4-1] Outline

The coolant water temperature sensor failure detection unit 93 is configured to detect a failure of the coolant water temperature sensor 72. The intake temperature sensor failure detection unit 94 is configured to detect a failure of the intake temperature sensor 75. The coolant water temperature sensor failure detection unit 93 and the intake temperature sensor failure detection unit 94 determine whether there is a failure when the main switch 17 is turned on. The coolant water temperature sensor failure detection unit 93 and the intake temperature sensor failure detection unit 94 do not determine whether there is a failure when the main switch 17 is turned off.

When the engine unit 11 is driven, heat is generated in the engine unit 11 as the mixture gas is burned in the combustion chamber 28. Meanwhile, when the motorcycle 1 is running, heat is taken away from the motorcycle 1 by an air flow colliding with the motorcycle 1. The higher the flow rate of the air flow is, the more heat is taken away from the motorcycle 1. Furthermore, when the motorcycle 1 runs in rain, more heat is taken away from the motorcycle 1 than in a sunny condition, by the air flow and rain water colliding with the motorcycle 1. Furthermore, when the motorcycle 1 runs on a road with pools of water, water may be splashed by the front wheel 2 or the rear wheel 3 onto the motorcycle 1. When the motorcycle 1 is wet, more heat is taken away from the motorcycle 1. Furthermore, when the motorcycle 1 is running, the radiator 41 receives an air flow as the radiator fan 42 is driven. This air flow cools the coolant water flowing in the radiator 41. Heat is taken away from the engine main body 20 by the coolant water supplied from the radiator 41. In this way, on account of the air flow received by the radiator 41, heat is taken away from the engine main body 20. The higher the flow rate of the air flow received by the radiator 41 is, the more heat is taken away from the engine main body 20.

The temperature of the coolant water in the cooling passage 22b, which is a detection target of the coolant water temperature sensor 72, is influenced by an amount of heat generated in the engine unit 11 when the engine unit 11 is driven. An amount of heat generated in the engine unit 11 and influencing the temperature of the coolant water in the cooling passage 22b is termed a first generated heat amount. The first generated heat amount is an amount of heat generated in the engine unit 11 by the combustion of the mixture gas.

The temperature of the coolant water in the cooling passage 22b is influenced by an amount of heat taken away from the motorcycle 1 as the motorcycle 1 runs. The temperature of the coolant water in the cooling passage 22b is particularly influenced by an amount of heat taken away from the engine unit 11. The temperature of the coolant water in the cooling passage 22b is particularly influenced by an amount of heat taken away from the engine main body 20. An amount of heat taken away from the motorcycle 1 and influencing the temperature of the coolant water in the cooling passage 22b is termed a first dissipated heat amount. The first dissipated heat amount relates to the flow rate of an air flow received by the motorcycle 1, the outside temperature, and the state of wetting of the motorcycle 1.

The temperature of air in the branched intake passage member 52, which is a detection target of the intake temperature sensor 75, is influenced by the amount of heat generated in the engine unit 11, in the same manner as the temperature of the coolant water. An amount of heat generated in the engine unit 11 and influencing the temperature of the air in the branched intake passage member 52 is termed a second generated heat amount. The second generated heat amount is an amount of heat generated in the engine unit 11 by the combustion of the mixture gas.

The temperature of air in the branched intake passage member 52, which is a detection target of the intake temperature sensor 75, is influenced by the amount of heat taken away from the motorcycle 1 as the motorcycle 1 runs, in the same manner as the temperature of the coolant water. The temperature of the air in the branched intake passage member 52 is particularly influenced by the amount of heat taken away from the engine unit 11. An amount of heat taken away from the motorcycle 1 and influencing the temperature of the air in the branched intake passage member 52 is termed a second dissipated heat amount. The second dissipated heat amount relates to the flow rate of an air flow received by the motorcycle 1, the outside temperature, and the state of wetting of the motorcycle 1.

The coolant water temperature sensor failure detection unit 93 detects a failure of the coolant water temperature sensor 72 based on at least one signal of the coolant water temperature sensor 72, at least one first generated heat amount-related parameter, and at least one first dissipated heat amount-related parameter. The first generated heat amount-related parameter relates to the above-mentioned first generated heat amount. The first generated heat amount-related parameter further relates to the state of the motorcycle 1. The first dissipated heat amount-related parameter relates to the first dissipated heat amount taken away from the motorcycle 1 as the motorcycle 1 runs. The first dissipated heat amount-related parameter may relate to the first dissipated heat amount taken away from the motorcycle 1 when the motorcycle 1 does not run. The first dissipated heat amount-related parameter further relates to the circumference of the motorcycle 1. The first dissipated heat amount-related parameter relates to, for example, the flow rate of the air flow received by the motorcycle 1, the outside temperature, or the state of wetting of the motorcycle 1.

The intake temperature sensor failure detection unit 94 detects a failure of the intake temperature sensor 75 based on at least one signal of the intake temperature sensor 75, at least one second generated heat amount-related parameter, and at least one second dissipated heat amount-related parameter. The second generated heat amount-related parameter relates to the above-mentioned second generated heat amount. The second generated heat amount-related parameter further relates to the state of the motorcycle 1. The second dissipated heat amount-related parameter relates to the second dissipated heat amount taken away from the motorcycle 1 as the motorcycle 1 runs. The second dissipated heat amount-related parameter may relate to the second dissipated heat amount taken away from the motorcycle 1 when the motorcycle 1 does not run. The second dissipated heat amount-related parameter further relates to the circumference of the motorcycle 1. The second dissipated heat amount-related parameter relates to, for example, the flow rate of the air flow received by the motorcycle 1, the outside temperature, or the state of wetting of the motorcycle 1.

### [4-2] Specific Example of Detection of Failure of the Coolant Water Temperature Sensor

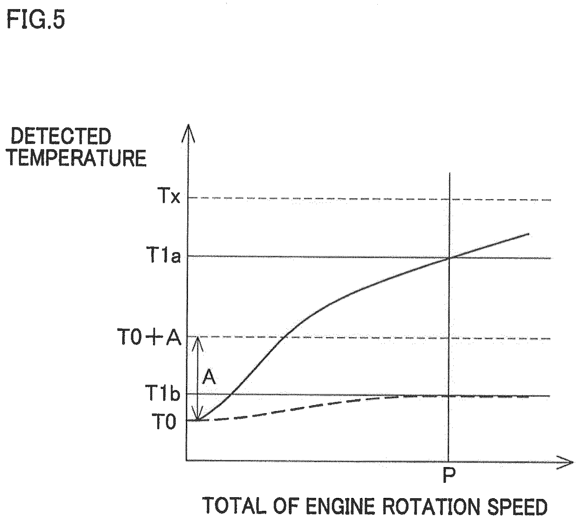

The following details how the coolant water temperature sensor failure detection unit 93 detects a failure. The vertical axis of the graph in FIG. 5 indicates a temperature (detected temperature) calculated from an output signal of the coolant water temperature sensor 72. The transverse axis of the graph in FIG. 5 indicates the integrated value of the engine rotation speeds from the start of the engine unit 11. The integrated value of the engine rotation speed is calculated based on signals of the engine rotation speed sensor 71. In the graph in FIG. 5, a full line indicates a case where the coolant water temperature sensor 72 is normal, whereas a dotted line indicates a case where the coolant water temperature sensor 72 has a failure. The temperature detected by the coolant water temperature sensor 72 at the start of the engine unit 11 is termed a temperature T0.

When the coolant water temperature sensor 72 is normal, the temperature detected by the coolant water temperature sensor 72 increases as the integrated value of the engine rotation speed increases. By utilizing this tendency, the coolant water temperature sensor failure detection unit 93 detects a failure of the coolant water temperature sensor 72. To be more specific, the coolant water temperature sensor failure detection unit 93 continuously integrates the engine rotation speed after the start of the engine unit 11. It is noted that the calculation excludes the engine rotation speed when the above-mentioned fuel cut control is executed. The temperature detected by the coolant water temperature sensor 72 when the calculated integrated value of the rotation speed reaches a predetermined value P is termed a temperature T1. In the graph in FIG. 5, the detected temperature T1 when the coolant water temperature sensor 72 is normal is a temperature T1a. The detected temperature T1 when the coolant water temperature sensor 72 has a failure is a temperature T1b. The coolant water temperature sensor failure detection unit 93 calculates a difference (T1-T0) between the detected temperature T1 and the detected temperature T0 at the start. Then whether there is a failure in the coolant water temperature sensor 72 is determined by comparing the temperature difference (T1-T0) with a predetermined failure determination threshold A. When the temperature difference (T1-T0) is smaller than the predetermined failure determination threshold A, the coolant water temperature sensor failure detection unit 93 determines that there is a failure of the coolant water temperature sensor 72. When the temperature difference (T1-T0) is equal to or larger than the predetermined failure determination threshold A, it is determined that there is no failure of the coolant water temperature sensor 72. In the descriptions below, the temperature difference (T1-T0) may be referred to as a determination value.

After the determination of the existence of a failure, the coolant water temperature sensor failure detection unit 93 does not execute the determination of the existence of a failure until the next start of the engine unit 11. Furthermore, the coolant water temperature sensor failure detection unit 93 does not execute the determination of the existence of a failure after the stop of the driving of the engine unit 11 is instructed. In other words, the determination of the existence of a failure is not executed after the engine stop switch 18B is switched on.

In the present embodiment, a difference between temperatures detected from two signals of the coolant water temperature sensor 72 is calculated. This temperature difference is compared with the failure determination threshold A. Alternatively, a difference between the two signals (voltage values) of the coolant water temperature sensor 72 may be compared with a failure determination threshold. This failure determination threshold is a voltage value corresponding to the failure determination threshold A.

When the temperature T0 detected by the coolant water temperature sensor 72 at the start of the engine unit 11 is equal to or higher than a predetermined temperature Tx, the coolant water temperature sensor failure detection unit 93 does not execute detection of a failure of the coolant water temperature sensor 72. The coolant water temperature sensor failure detection unit 93 executes the detection of a failure when the start of the engine unit 11 is a cold start, and does not execute the detection of a failure when the start of the engine unit 11 is not a cold start. The coolant water temperature sensor failure detection unit 93 executes the above-mentioned detection of a failure of the coolant water temperature sensor 72 when the detected temperature T0 is lower than the predetermined temperature Tx. When the driving of the engine unit 11 is stopped and immediately re-started, the detected temperature T0 at the start of the engine unit 11 may be high. Therefore, the temperature difference (T1-T0) is smaller than the failure determination threshold A even though the coolant water temperature sensor 72 is normal. An erroneous detection of a failure of the coolant water temperature sensor 72 in the case above is avoided, because the detection of a failure is not executed when the detected temperature T0 is equal to or higher than the temperature Tx.

The magnitude of the integrated value of the engine rotation speed relates to the amount of heat generated in the engine unit 11 and influencing the temperature of the coolant water. The integrated value of the engine rotation speed is one of the at least one first generated heat amount-related parameter used for detecting a failure of the coolant water temperature sensor 72. The temperature difference (T1-T0) is derived based on the integrated value of the engine rotation speed, which is the first generated heat amount-related parameter, and a signal of the coolant water temperature sensor 72. The temperature difference (T1-T0) is determined when the integrated value of the engine rotation speed, which is the first generated heat amount-related parameter, reaches the predetermined value P. In other words, the temperature difference (T1-T0) is determined when the first generated heat amount-related parameter satisfies a predetermined condition. The temperature difference (T1-T0) is equivalent to a second determination value of the present teaching. The failure determination threshold A is equivalent to a second failure determination threshold of the present teaching.

Heat is generated in the engine unit 11 when the engine unit 11 is driven. When the integrated value of the engine rotation speed is large, the total amount of heat generated in the engine unit 11 is large. The temperature difference (T1-T0) is determined based on the integrated value of the engine rotation speed which is the first generated heat amount-related parameter. As a result, the detection of a failure of the coolant water temperature sensor 72 is executed based on the integrated value of the engine rotation speed which is the first generated heat amount-related parameter. Due to this, the detection of a failure of the coolant water temperature sensor 72 is further accurately executed even if the temperature of the coolant water varies in accordance with the engine rotation speed. Furthermore, heat by combustion is not generated when the fuel cut control is executed. Because the integrated value of the engine rotation speed is calculated without including a period in which the fuel cut control is executed, the detection of a failure of the coolant water temperature sensor 72 is further accurately executed.

The coolant water temperature sensor failure detection unit 93 changes the failure determination threshold A. A base value on which the failure determination threshold A is determined in advance in consideration of, for example, a difference between the temperature of the coolant water when the integrated value of the engine rotation speed reaches the predetermined value P and the temperature of the coolant water at the cold start. The failure determination threshold A is determined by changing this base value. The failure determination threshold A is changed based on at least one first dissipated heat amount-related parameter. The failure determination threshold A may be changed based on at least one first dissipated heat amount-related parameter and at least one first generated heat amount-related parameter. For example, for each parameter, an addend or a subtrahend is calculated as a correction value of the failure determination threshold A. Then the total of the addend is added to and the total of the subtrahend is subtracted from the base value of the failure determination threshold A. The resultant value is used as the failure determination threshold A. When the failure determination threshold A is changed based on the first dissipated heat amount-related parameter and the first generated heat amount-related parameter, the failure determination threshold A is equivalent to a first failure determination threshold of the present teaching. As a result, the failure determination threshold A is equivalent to both the first and second failure determination thresholds of the present teaching.

When the failure determination threshold A is not changed based on the first generated heat amount-related parameter, the failure determination threshold A is changed based on the first dissipated heat amount-related parameter as below. When the first dissipated heat amount-related parameter is changed so that the first dissipated heat amount increases, the failure determination threshold A is changed so as to decrease. When the first dissipated heat amount-related parameter is changed so that the first dissipated heat amount decreases, the failure determination threshold A is changed so as to increase. In other words, the larger the first dissipated heat amount is, the lower the failure determination threshold A is. Furthermore, the smaller the first dissipated heat amount is, the higher the failure determination threshold A is. When the amount of increase or decrease of the first dissipated heat amount is small, the failure determination threshold A may not be changed.

When the failure determination threshold A is not changed based on the first dissipated heat amount-related parameter, the failure determination threshold A is changed based on the first generated heat amount-related parameter as below. When the first generated heat amount-related parameter is changed so that the first generated heat amount increases, the failure determination threshold A is changed so as to increase. When the first generated heat amount-related parameter is changed so that the first generated heat amount decreases, the failure determination threshold A is changed so as to decrease. In other words, the larger the first generated heat amount is, the higher the failure determination threshold A is. Furthermore, the smaller the first generated heat amount is, the lower the failure determination threshold A is. When the amount of increase or decrease of the first generated heat amount is small, the failure determination threshold A may not be changed.

The failure determination threshold A may be changed based on at least one first dissipated heat amount-related parameter, at least one first generated heat amount-related parameter, and at least one first generated heat amount correction parameter. The first generated heat amount correction parameter relates to the amount of heat generated in the engine unit 11 and influencing the temperature of the coolant water in the cooling passage 22b. The first generated heat amount correction parameter, however, relates to a state in which no heat is generated in the engine unit 11. The first generated heat amount correction parameter is, for example, a duration of the idling stop state. When no heat is generated, the failure determination threshold A is changed so as to decrease.

The failure determination threshold A may be changed based on at least one first dissipated heat amount-related parameter, at least one first generated heat amount-related parameter, and the temperature T0 detected by the coolant water temperature sensor 72 at the engine start.

[4-3] Specific Example of First Dissipated Heat amount-related parameter Used for Changing Failure Determination Threshold

The first dissipated heat amount-related parameters used for changing the failure determination threshold A are, for example, information which relates to the vehicle speed, gear position information, information which relates to the rotation speed of the radiator fan 42, a rotation time of the radiator fan 42, an intake temperature, a duration of the idling stop state, whether idling stop has been executed, a fuel cut time, and whether fuel cut control has been executed.

The information which relates to the vehicle speed as the first dissipated heat amount-related parameter is, for example, a vehicle speed, a difference between two vehicle speeds, an integrated value of the vehicle speed, a differential value of the vehicle speed, or a combination of them. The vehicle speed is calculated based on a signal of the vehicle speed sensor 19. The vehicle speed as the first dissipated heat amount-related parameter may be a value calculated from a single signal of the vehicle speed sensor 19 or a central value (e.g., an average) of vehicle speeds calculated from a plurality of signals of the vehicle speed sensor 19. A differential value of the vehicle speed is a differential value over time. An integrated value of the vehicle speed is an integrated value over time.

A vehicle speed as the first dissipated heat amount-related parameter is preferably the vehicle speed detected by the vehicle speed sensor 19 when the integrated value of the engine rotation speed reaches the predetermined value P. A vehicle speed as the first dissipated heat amount-related parameter may be the vehicle speed detected by the vehicle speed sensor 19 when the integrated value of the engine rotation speed substantially reaches the predetermined value P.

The higher the vehicle speed is, the larger the amount of heat taken away from the motorcycle 1 by an air flow is. The coolant water temperature sensor failure detection unit 93 determines a correction value for changing the failure determination threshold A. The determination is performed by, for example, comparing a detected vehicle speed with a reference speed. For example, when a result of subtracting the reference speed from a vehicle speed is equal to or higher than a predetermined value, a subtrahend is selected as the correction value. Meanwhile, when a result of subtracting the reference speed from a vehicle speed is lower than the predetermined value, zero or an addend is selected as the correction value. The failure determination threshold A is changed based on the vehicle speed which is the first dissipated heat amount related parameter. As a result, the detection of a failure of the coolant water temperature sensor 72 is executed based on the vehicle speed which is the first dissipated heat amount-related parameter. Due to this, the detection of a failure of the coolant water temperature sensor 72 is accurately executed even if the temperature of the coolant water varies in accordance with the vehicle speed.

The gear position information as the first dissipated heat amount-related parameter is a gear position detected by the gear position sensor 77. The gear position sensor 77 equivalent to a gear position acquisition unit of the present teaching. The gear position information as the first dissipated heat amount-related parameter is preferably the gear position detected by the gear position sensor 77 when the integrated value of the engine rotation speed reaches the predetermined value P. The gear position information as the first dissipated heat amount-related parameter may be a gear position detected by the gear position sensor 77 when the integrated value of the engine rotation speed substantially reaches the predetermined value P. The gear position information as the dissipated heat amount-related parameter may not include a neutral position. In other words, the gear position information as the first dissipated heat amount-related parameter may be one of gear positions corresponding to the respective transmission ratios.

Typically, the smaller the transmission ratio of the gearbox 80 is, the higher the vehicle speed is. The higher the vehicle speed is, the larger the amount of heat taken away from the motorcycle 1 by an air flow is. The coolant water temperature sensor failure detection unit 93 determines the correction value for changing the failure determination threshold A, based on the detected gear position. For example, when the detected gear position is the fifth speed or the sixth speed, a subtrahend is selected as the correction value. When the detected gear position is the fifth speed or the sixth speed, zero is selected as the correction value. When the detected gear position is the first speed or the second speed, an addend is selected as the correction value.

The failure determination threshold A is changed based on the gear position information which is the first dissipated heat amount-related parameter. As a result, the detection of a failure of the coolant water temperature sensor 72 is executed based on the gear position information which is the first dissipated heat amount-related parameter. Due to this, even if the temperature of the coolant water is changed in accordance with the gear position of the gearbox 80, the detection of a failure of the coolant water temperature sensor 72 is further accurately executed.

The engine controlling unit 91 may estimate the gear position of the gearbox 80 based on a signal of the engine rotation speed sensor 71 and a signal of the vehicle speed sensor 19. The engine controlling unit 91 uses the estimated gear position for controlling the engine unit 11. In this case, the gear position information as the first dissipated heat amount-related parameter may be the gear position estimated by the engine controlling unit 91. The engine rotation speed sensor 71, the vehicle speed sensor 19, and the engine controlling unit 91 estimating the gear position are equivalent to the gear position acquisition unit of the present teaching. When the engine controlling unit 91 does not estimate the gear position, the sensor failure detection unit 92 may estimate the gear position.

The rotation speed of the radiator fan 42, which is the first dissipated heat amount-related parameter, is, for example, the rotation speed of the radiator fan 42, a difference between the rotation speeds of two radiator fans 42, an integrated value of the rotation speed of the radiator fan 42, a differential value of the rotation speed of the radiator fan 42, or a combination of them. The rotation speed of the radiator fan 42 is acquired based on an instruction signal sent from the ECU 90 to the fan motor 44. The rotation speed of the radiator fan 42 as the first dissipated heat amount-related parameter may be a value calculated from a single signal or a central value (e.g., an average) of rotation speeds calculated from a plurality of signals. When the radiator fan 42 is driven by the crankshaft 25, the rotation speed of the radiator fan 42 may be calculated based on a signal of the engine rotation speed sensor 71. A differential value of the rotation speed of the radiator fan 42 is a differential value over time. An integrated value of the rotation speed of the radiator fan 42 is an integrated value over time.

The rotation speed of the radiator fan 42 as the first dissipated heat amount-related parameter is preferably the rotation speed of the radiator fan 42 when the integrated value of the engine rotation speed reaches the predetermined value P. The rotation speed of the radiator fan 42 as the first dissipated heat amount-related parameter may be the rotation speed of the radiator fan 42 when the integrated value of the engine rotation speed substantially reaches the predetermined value P.

As the radiator fan 42 rotates, heat is taken away from the radiator 41. When the rotation speed of the radiator fan 42 is high, a large amount of heat is taken away from the radiator 41 by an air flow. Therefore, a larger amount of heat is taken away from the engine unit 11 by the coolant water. The coolant water temperature sensor failure detection unit 93 determines a correction value for changing the failure determination threshold A. The determination is performed by, for example, comparing the rotation speed of the radiator fan 42 with a referential rotation speed. For example, when a result of subtracting the reference rotation speed from the rotation speed of the radiator fan 42 is equal to or higher than a predetermined value, a subtrahend is selected as the correction value. Meanwhile, when a result of subtracting the reference rotation speed from the rotation speed of the radiator fan 42 is lower than the predetermined value, zero or an addend is selected as the correction value.

The failure determination threshold A is changed based on the rotation speed of the radiator fan 42 which is the first dissipated heat amount-related parameter. As a result, the detection of a failure of the coolant water temperature sensor 72 is executed based on the rotation speed of the radiator fan 42 which is the first dissipated heat amount-related parameter. Due to this, the detection of a failure of the coolant water temperature sensor 72 is accurately executed even if the temperature of the coolant water varies in accordance with the rotation speed of the radiator fan 42.

The integrated value of the rotation speed of the radiator fan 42 as the first dissipated heat amount-related parameter is preferably the integrated value of the rotation speed of the radiator fan 42 from the start of the engine unit 11 to the time when the integrated value of the engine rotation speed reaches the predetermined value P. The integrated value of the rotation speed of the radiator fan 42 as the first dissipated heat amount-related parameter may be an integrated value of the rotation speed of the radiator fan 42 from the start of the engine unit 11 to around the time when the integrated value of the engine rotation speed reaches the predetermined value P.

When the integrated value of the rotation speed of the radiator fan 42 is large, the total amount of heat taken away from the engine unit 11 is large. The coolant water temperature sensor failure detection unit 93 determines a correction value for changing the failure determination threshold A. The determination is performed by, for example, comparing the integrated value of the rotation speed of the radiator fan 42 with a referential value. For example, when a result of subtracting the reference value from the integrated value of the rotation speed of the radiator fan 42 is equal to or larger than a predetermined value, a subtrahend is selected as the correction value. Meanwhile, when a result of subtracting the reference value from the integrated value of the rotation speed of the radiator fan 42 is lower than the predetermined value, zero or an addend is selected as the correction value.

The failure determination threshold A is changed based on the integrated value of the rotation speed of the radiator fan 42 which is the first dissipated heat amount-related parameter. As a result, the detection of a failure of the coolant water temperature sensor 72 is executed based on the integrated value of the rotation speed of the radiator fan 42 which is the first dissipated heat amount-related parameter. Due to this, the detection of a failure of the coolant water temperature sensor 72 is accurately executed even if the temperature of the coolant water varies in accordance with the rotation of the radiator fan 42.

The differential value of the rotation speed of the radiator fan 42 as the first dissipated heat amount-related parameter is preferably the differential value of the rotation speed of the radiator fan 42 when the integrated value of the engine rotation speed reaches the predetermined value P. The differential value of the rotation speed of the radiator fan 42 as the first dissipated heat amount-related parameter may be the differential value of the rotation speed of the radiator fan 42 when the integrated value of the engine rotation speed substantially reaches the predetermined value P.

When the differential value of the rotation speed of the radiator fan 42 is positive and large, the acceleration of the rotation speed of the radiator fan 42 is positive and large. In this case, a larger amount of heat is taken away from the engine unit 11. The coolant water temperature sensor failure detection unit 93 determines a correction value for changing the failure determination threshold A. The determination is performed by, for example, comparing the differential value of the rotation speed of the radiator fan 42 with a referential value. For example, when a result of subtracting the reference value from the differential value of the rotation speed of the radiator fan 42 is equal to or higher than a predetermined value, a subtrahend is selected as the correction value. Meanwhile, when a result of subtracting the reference value from the differential value of the rotation speed of the radiator fan 42 is lower than the predetermined value, zero or an addend is selected as the correction value.

The failure determination threshold A is changed based on the differential value of the rotation speed of the radiator fan 42 which is the first dissipated heat amount related parameter. As a result, the detection of a failure of the coolant water temperature sensor 72 is executed based on the differential value of the rotation speed of the radiator fan 42 which is the first dissipated heat amount-related parameter. Due to this, the detection of a failure of the coolant water temperature sensor 72 is accurately executed even if the temperature of the coolant water varies in accordance with a change of the rotation speed of the radiator fan 42.

The rotation time of the radiator fan 42 as the first dissipated heat amount-related parameter is preferably the rotation time of the radiator fan 42 from the start of the engine unit 11 to the time when the integrated value of the engine rotation speed reaches the predetermined value P. The rotation time of the radiator fan 42 as the first dissipated heat amount-related parameter may be the rotation time of the radiator fan 42 from the start of the engine unit 11 to around the time when the integrated value of the engine rotation speed reaches the predetermined value P. The rotation time of the radiator fan 42 is a time during which the radiator fan 42 is driven by the fan motor 44 (or the crankshaft 25).

When the rotation time of the radiator fan 42 is long, the total amount of heat taken away from the engine unit 11 is large. The coolant water temperature sensor failure detection unit 93 determines a correction value for changing the failure determination threshold A. The determination is performed by, for example, comparing the rotation time of the radiator fan 42 with a reference time. For example, when a result of subtracting the reference time from the rotation time of the radiator fan 42 is equal to or larger than a predetermined value, a subtrahend is selected as the correction value. Meanwhile, when a result of subtracting the reference time from the rotation time of the radiator fan 42 is smaller than the predetermined value, zero or an addend is selected as the correction value.

The failure determination threshold A is changed based on the rotation time of the radiator fan 42 which is the first dissipated heat amount-related parameter. As a result, the detection of a failure of the coolant water temperature sensor 72 is executed based on the rotation time of the radiator fan 42 which is the first dissipated heat amount-related parameter. Due to this, the detection of a failure of the coolant water temperature sensor 72 is accurately executed even if the temperature of the coolant water varies in accordance with the rotation of the radiator fan 42.

The intake temperature as the first dissipated heat amount-related parameter is a temperature calculated from a signal of the intake temperature sensor 75. The intake temperature as the first dissipated heat amount-related parameter may be a voltage signal of the intake temperature sensor 75. The intake temperature as the first dissipated heat amount-related parameter is preferably an intake temperature when the integrated value of the engine rotation speed reaches the predetermined value P. The intake temperature as the first dissipated heat amount-related parameter may be an intake temperature when the integrated value of the engine rotation speed substantially reaches the predetermined value P.

An intake temperature detected by the intake temperature sensor 75 is substantially equal to the outside temperature. The outside temperature varies depending on the area, season, and so on. The lower the outside temperature is, the larger the amount of heat taken away from the motorcycle 1 to the atmosphere is. The coolant water temperature sensor failure detection unit 93 determines a correction value for changing the failure determination threshold A. The determination performed by, for example, comparing the detected intake temperature with a reference temperature. For example, when a result of subtracting the reference temperature from the intake temperature is smaller than a predetermined value, a subtrahend is selected as the correction value. Meanwhile, when a result of subtracting the reference temperature from the intake temperature is equal to or higher than the predetermined value, zero or an addend is selected as the correction value.

The failure determination threshold A is changed based on the intake temperature which is the first dissipated heat amount-related parameter. As a result, the detection of a failure of the coolant water temperature sensor 72 is executed based on the intake temperature which is the first dissipated heat amount-related parameter. Due to this, the detection of a failure of the coolant water temperature sensor 72 is accurately executed even if the temperature of the coolant water varies in accordance with the outside temperature. The intake temperature sensor 75 is equivalent to an outside temperature sensor of the present teaching.

The duration of the idling stop state as the first dissipated heat amount-related parameter is preferably the total time of the idling stop state in a period from the start of the engine unit 11 to the time when the integrated value of the engine rotation speed reaches the predetermined value P.

The idling stop is executed when the vehicle speed is zero or significantly low. Therefore, the vehicle speed is considered to be zero in the idling stop state. As a result, the longer the duration of the idling stop state is, the smaller the amount of heat taken away from the motorcycle 1 by an air flow is. In other words, the longer the duration of the idling stop state is, the less amount of heat taken away from the motorcycle 1 due to the running of the motorcycle 1 is. To put it differently, the duration of the idling stop state relates to the amount of heat taken away from the motorcycle 1 due to the running of the motorcycle 1. The coolant water temperature sensor failure detection unit 93 determines a correction value for changing the failure determination threshold A. The determination is performed by, for example, comparing the duration of the idling stop state with a reference time. For example, when a result of subtracting the reference time from the duration of the idling stop state is equal to or larger than a predetermined value, an addend is selected as the correction value. Meanwhile, when a result of subtracting the reference time from the duration of the idling stop state is smaller than the predetermined value, zero is selected as the correction value.

The failure determination threshold A is changed based on the duration of the idling stop state which is the first dissipated heat amount-related parameter. As a result, the detection of a failure of the coolant water temperature sensor 72 is executed based on the duration of the idling stop state which is the first dissipated heat amount-related parameter. Due to this, the detection of a failure of the coolant water temperature sensor 72 is accurately executed even if the idling stop has been executed.

Whether the idling stop has been executed, as the first dissipated heat amount-related parameter, is preferable whether the idling stop has been executed when the integrated value of the engine rotation speed reaches the predetermined value P. Whether the idling stop has been executed, as the first dissipated heat amount-related parameter, may be whether the idling stop has been executed in a period from the start of the engine unit 11 to the time when the integrated value of the engine rotation speed reaches the predetermined value P.

The vehicle speed is considered to be zero in the idling stop state. Therefore, when the idling stop has been executed, a small amount of heat is taken away from the motorcycle 1 by an air flow. When the idling stop has been executed, the amount of heat taken away from the motorcycle 1 as the motorcycle 1 runs is small as compared to the absence of the idling stop. To put it differently, whether the idling stop has been executed therefore relates to the amount of heat taken away from the motorcycle 1 as the motorcycle 1 runs. The coolant water temperature sensor failure detection unit 93 determines the correction value for changing the failure determination threshold A, based on whether the idling stop has been executed. For example, when the idling stop has been executed, an addend is selected as the correction value. Meanwhile, when the idling stop has not been executed, zero is selected as the correction value.

The failure determination threshold A is changed based on whether the idling stop has been executed, which is the first dissipated heat amount-related parameter. As a result, the detection of a failure of the coolant water temperature sensor 72 is executed based on whether the idling stop has been executed, which is the first dissipated heat amount-related parameter. Due to this, the detection of a failure of the coolant water temperature sensor 72 is accurately executed even if the idling stop has been executed.

The fuel cut time as the first dissipated heat amount-related parameter is preferably the fuel cut time in a period from the start of the engine unit 11 to the time when the integrated value of the engine rotation speed reaches the predetermined value P.

The combustion energy for rotating the crankshaft 25 is not generated when the fuel cut control is executed. Therefore, the longer the fuel cut time is, the lower the vehicle speed is. Furthermore, when the fuel cut time is longer than a predetermined time, the vehicle speed is considered to be zero. The longer the fuel cut time is, the smaller the amount of heat taken away from the motorcycle 1 by an air flow is. To put it differently, the fuel cut time relates to the amount of heat taken away from the motorcycle 1 due to the running of the motorcycle 1. The coolant water temperature sensor failure detection unit 93 determines a correction value for changing the failure determination threshold A by, for example, comparing the fuel cut time with a reference time. For example, when a result of subtracting the reference time from the fuel cut time is equal to or larger than a predetermined value, an addend is selected as the correction value. Meanwhile, when a result of subtracting the reference time from the fuel cut time is smaller than the predetermined value, zero is selected as the correction value.

The failure determination threshold A is changed based on the fuel cut time which is the first dissipated heat amount-related parameter. As a result, the detection of a failure of the coolant water temperature sensor 72 is executed based on the fuel cut time which is the first dissipated heat amount-related parameter. Due to this, the detection of a failure of the coolant water temperature sensor 72 is accurately executed even if the fuel cut control is executed.

Whether the fuel cut control has been executed, as the first dissipated heat amount-related parameter, is preferable whether the fuel cut control has been executed when the integrated value of the engine rotation speed reaches the predetermined value P. Whether the fuel cut control has been executed, as the first dissipated heat amount-related parameter, may be whether the fuel cut control has been executed in a period from the start of the engine unit 11 to the time when the integrated value of the engine rotation speed reaches the predetermined value P. The combustion energy for rotating the crankshaft 25 is not generated when the fuel cut control is executed. Therefore, the vehicle speed decreases as the fuel cut control is executed. As a result, the amount of heat taken away from the motorcycle 1 by an air flow is decreased as the fuel cut control is executed. To put it differently, whether the fuel cut control has been executed therefore relates to the amount of heat taken away from the motorcycle 1 as the motorcycle 1 runs. The coolant water temperature sensor failure detection unit 93 determines the correction value for changing the failure determination threshold A, based on whether the fuel cut control has been executed. For example, when the fuel cut control has been executed, an addend is selected as the correction value. Meanwhile, when the fuel cut control has not been executed, zero is selected as the correction value. The failure determination threshold A is changed based on the fuel cut which is the first dissipated heat amount-related parameter. As a result, the detection of a failure of the coolant water temperature sensor 72 is executed based on the whether the fuel cut has been executed, which is the first dissipated heat amount-related parameter. Due to this, the detection of a failure of the coolant water temperature sensor 72 is accurately executed even if the fuel cut control has been executed.

### [4-4] Specific Example of First Generated Heat amount-related parameter Used for Changing Failure Determination Threshold

The first generated heat amount-related parameters used for changing the failure determination threshold A are, for example, information which relates to the engine rotation speed, an engine driving time, information which relates to the vehicle speed, information which relates to the air-fuel ratio of mixture gas, information which relates to the fuel injection amount, and information which relates to the intake air amount.

The information which relates to the engine rotation speed, which is the first generated heat amount-related parameter, is, for example, the engine rotation speed, a difference between two engine rotation speeds, an integrated value of the engine rotation speed, a differential value of the engine rotation speed, or a combination of them. The engine rotation speed is calculated based on a signal of the engine rotation speed sensor 71. The engine rotation speed, which is the first generated heat amount-related parameter, may be a single engine rotation speed obtained from a single signal of the engine rotation speed sensor 71 or a central value (e.g., an average) of engine rotation speeds calculated from a plurality of signals of the engine rotation speed sensor 71. A differential value of the engine rotation speed is a differential value over time. An integrated value of the engine rotation speed is an integrated value over time.

The engine rotation speed as the first generated heat amount-related parameter is preferably the engine rotation speed detected when the integrated value of the engine rotation speed reaches the predetermined value P.

When the engine rotation speed is high, a large amount of heat is generated in the engine unit 11. The coolant water temperature sensor failure detection unit 93 determines a correction value for changing the failure determination threshold A. The determination is performed by, for example, comparing the detected engine rotation speed with a referential engine rotation speed. For example, when a result of subtracting the reference engine rotation speed from an engine rotation speed is equal to or higher than a predetermined value, an addend is selected as the correction value. Meanwhile, when a result of subtracting the reference rotation speed from the engine rotation speed is lower than a predetermined value, zero or a subtrahend is selected as the correction value.

The failure determination threshold A is changed based on the engine rotation speed which is the first generated heat amount-related parameter. As a result, the detection of a failure of the coolant water temperature sensor 72 is executed based on the engine rotation speed which is the first generated heat amount-related parameter. Due to this, the detection of a failure of the coolant water temperature sensor 72 is accurately executed even if the temperature of the coolant water varies in accordance with the engine rotation speed.

The differential value of the engine rotation speed as the first generated heat amount-related parameter is preferably the differential value of the engine rotation speed detected when the integrated value of the engine rotation speed reaches the predetermined value P.

When the acceleration of the engine rotation speed is positive and high, i.e., when the differential value of the engine rotation speed is positive and large, a large amount of heat is generated in the engine unit 11. The coolant water temperature sensor failure detection unit 93 determines a correction value for changing the failure determination threshold A. The determination is performed by, for example, comparing the differential value of the engine rotation speed with a referential value. For example, when a result of subtracting the reference value from a differential value of an engine rotation speed is equal to or higher than a predetermined value, an addend is selected as the correction value. Meanwhile, when a result of subtracting the reference value from the differential value of the engine rotation speed is lower than the predetermined value, zero or a subtrahend is selected as the correction value.

The failure determination threshold A is changed based on the differential value of the engine rotation speed which is the first generated heat amount-related parameter. As a result, the detection of a failure of the coolant water temperature sensor 72 is executed based on the differential value of the engine rotation speed which is the first generated heat amount-related parameter. Due to this, the detection of a failure of the coolant water temperature sensor 72 is accurately executed even if the temperature of the coolant water varies in accordance with a change of the engine rotation speed.

An engine driving time as the first generated heat amount-related parameter is preferably a time in which the engine unit 11 is driven during a period from the start of the engine unit 11 to the time when the integrated value of the engine rotation speed reaches the predetermined value P. The engine driving time as the first generated heat amount-related parameter preferably excludes the fuel cut time. The fuel cut time is a time in which the fuel cut control is executed. To be more specific, the fuel cut time is a duration in which a signal instructing fuel injection is not sent from the ECU 90 to the injector 35. The engine unit 11 is not driven in the idling stop state. The engine driving time therefore does not include a time in which the idling stop state is set. A method of calculating the engine driving time is not particularly limited. For example, the engine driving time may be calculated by subtracting the time of the idling stop state and the fuel cut time from the time elapsed from the switch-on of the engine start switch 18A. Alternatively, for example, the engine driving time may be calculated by subtracting the fuel cut time from the total duration in which the engine rotation speed detected by the engine rotation speed sensor 71 exceeds zero.

It is considered that, the shorter the engine driving time is, the higher the engine rotation speed when the integrated value of the engine rotation speed reaches the predetermined value P is. The coolant water temperature sensor failure detection unit 93 determines a correction value for changing the failure determination threshold A. The determination is performed by, for example, comparing the engine driving time with a referential value. For example, when a result of subtracting the reference time from the engine driving time is smaller than a predetermined value, an addend is selected as the correction value. Meanwhile, when a result of subtracting the reference time from the rotation time of the engine driving time is equal to or larger than the predetermined value, zero or a subtrahend is selected as the correction value.

The failure determination threshold A is changed based on the engine driving time which is the first generated heat amount-related parameter. As a result, the detection of a failure of the coolant water temperature sensor 72 is executed based on the engine driving time which is the first generated heat amount-related parameter. Due to this, the detection of a failure of the coolant water temperature sensor 72 is accurately executed even if the temperature of the coolant water varies in accordance with the engine driving time. Furthermore, heat by combustion is not generated when the fuel cut control is executed. The engine driving time does not include a time in which the fuel cut control is executed. As a result, the detection of a failure of the coolant water temperature sensor 72 is further accurately executed.

The information which relates to the vehicle speed as the first generated heat amount-related parameter is, for example, a vehicle speed, a difference between two vehicle speeds, an integrated value of the vehicle speed, a differential value of the vehicle speed, or a combination of them. The vehicle speed is calculated based on a signal of the vehicle speed sensor 19. The vehicle speed as the first generated heat amount-related parameter may be a value calculated from a single signal of the vehicle speed sensor 19 or a central value (e.g., an average) of vehicle speeds calculated from a plurality of signals of the vehicle speed sensor 19.

The vehicle speed as the first generated heat amount-related parameter is preferably the vehicle speed when the integrated value of the engine rotation speed reaches the predetermined value P.

When the vehicle speed is high, the engine rotation speed is also high. Therefore, the amount of heat generated in the engine unit 11 is considered to be large when the vehicle speed is high. The coolant water temperature sensor failure detection unit 93 determines a correction value for changing the failure determination threshold A. The determination is performed by, for example, comparing the detected vehicle speed with a reference vehicle speed. For example, when a result of subtracting the reference vehicle speed from the vehicle speed is equal to or larger than a predetermined value, an addend is selected as the correction value. Meanwhile, when a result of subtracting the reference vehicle speed from the vehicle speed is smaller than the predetermined value, zero or a subtrahend is selected as the correction value.

The failure determination threshold A is changed based on the vehicle speed which is the first generated heat amount-related parameter. As a result, the detection of a failure of the coolant water temperature sensor 72 is executed based on the vehicle speed which is the first generated heat amount-related parameter. Due to this, the detection of a failure of the coolant water temperature sensor 72 is accurately executed even if the temperature of the coolant water varies in accordance with the vehicle speed.

The information which relates to the air-fuel ratio of the mixture gas as the first generated heat amount-related parameter is information obtained from a signal of the oxygen sensor 76. The information which relates to the air-fuel ratio of the mixture gas as the first generated heat amount-related parameter is information indicating that the air-fuel ratio of the mixture gas is rich or lean. When the oxygen sensor 76 is a linear A/F sensor, the air-fuel ratio of the mixture gas obtained based on a signal of the oxygen sensor 76 may be used as the first generated heat amount-related parameter. The air-fuel ratio of the mixture gas as the first generated heat amount-related parameter may be an air-fuel ratio obtained from a single signal of the oxygen sensor 76 or a central value (e.g., an average) of air-fuel ratios calculated from a plurality of signals of the oxygen sensor 76.

The information which relates to the air-fuel ratio of the mixture gas as the first generated heat amount-related parameter is preferably based on a signal of the oxygen sensor 76 when the integrated value of the engine rotation speed reaches the predetermined value P. The information which relates to the air-fuel ratio of the mixture gas as the first generated heat amount-related parameter may be based on a signal of the oxygen sensor 76 when the integrated value of the engine rotation speed substantially reaches the predetermined value P.

When the air-fuel ratio of the mixture gas is lean, the amount of heat generated in the combustion chamber 28 in combustion is large when compared to cases where the air-fuel ratio is equal to the theoretical air-fuel ratio. When the air-fuel ratio of the mixture gas is rich, the amount of heat generated in the combustion chamber 28 in combustion is small when compared to cases where the air-fuel ratio is equal to the theoretical air-fuel ratio. The coolant water temperature sensor failure detection unit 93 determines the correction value for changing the failure determination threshold A, based on whether the air-fuel ratio of the mixture gas is lean or rich. For example, when the air-fuel ratio of the mixture gas is lean, an addend is selected as the correction value. Meanwhile, when the air-fuel ratio of the mixture gas is rich or equal to the theoretical air-fuel ratio, zero is selected as the correction value.

The failure determination threshold A is changed based on the information which relates to the air-fuel ratio of the mixture gas, which is the first generated heat amount-related parameter. As a result, the detection of a failure of the coolant water temperature sensor 72 is executed based on the information which relates to the air-fuel ratio of the mixture gas which is the first generated heat amount-related parameter. Due to this, the detection of a failure of the coolant water temperature sensor 72 is accurately executed even if the temperature of the coolant water varies in accordance with the air-fuel ratio of the mixture gas.

The information which relates to the fuel injection amount, which is the first generated heat amount-related parameter, is, for example, a fuel injection amount per injection, a difference between fuel injection amounts of two injections, an average of fuel injection amounts of plural injections, the total of fuel injection amounts of plural times, or a combination of them. A fuel injection amount is acquired based on an instruction signal sent from the ECU 90 to the injector 35.

The fuel injection amount as the first generated heat amount-related parameter is preferably a fuel injection amount from the injector 35 when the integrated value of the engine rotation speed reaches the predetermined value P. The fuel injection amount as the first generated heat amount-related parameter may be a fuel injection amount from the injector 35 when the integrated value of the engine rotation speed substantially reaches the predetermined value P.

When the air-fuel ratio of the mixture gas is constant, the amount of heat generated in the combustion chamber 28 increases as the fuel injection amount from the injector 35 per injection increases. The coolant water temperature sensor failure detection unit 93 determines a correction value for changing the failure determination threshold A. The determination is performed by, for example, comparing the fuel injection amount with a reference amount. For example, when a result of subtracting the reference amount from the fuel injection amount is equal to or larger than a predetermined value, an addend is selected as the correction value. Meanwhile, when a result of subtracting the reference amount from the fuel injection amount is smaller than the predetermined value, the correction value zero or a subtrahend is selected as the correction value.

The failure determination threshold A is changed based on the fuel injection amount which is the first generated heat amount-related parameter. As a result, the detection of a failure of the coolant water temperature sensor 72 is executed based on the fuel injection amount which is the first generated heat amount-related parameter. Due to this, the detection of a failure of the coolant water temperature sensor 72 is accurately executed even if the temperature of the coolant water varies in accordance with the fuel injection amount.

The total of the fuel injection amount as the first generated heat amount-related parameter is preferably the total of the fuel injection amount in a period from the start of the engine unit 11 to the time when the integrated value of the engine rotation speed reaches the predetermined value P. The total of the fuel injection amount as the first generated heat amount-related parameter may be the total of the fuel injection amount in a period from the start of the engine unit 11 to a time when the integrated value of the engine rotation speed substantially reaches the predetermined value P. The total of the fuel injection amount is the sum of the fuel injection amounts of plural fuel injections.

The larger the total of the fuel injection amount is, the larger the amount of heat generated in the combustion chamber 28 is. The coolant water temperature sensor failure detection unit 93 determines a correction value for changing the failure determination threshold A. The determination is performed by, for example, comparing the total of the fuel injection amount with a referential amount. For example, when a result of subtracting the reference amount from the total of the fuel injection amount is equal to or larger than a predetermined value, an addend is selected as the correction value. Meanwhile, when a result of subtracting the reference amount from the total of the fuel injection amount is lower than the predetermined value, zero or a subtrahend is selected as the correction value.

The failure determination threshold A is changed based on the total of the fuel injection amount which is the first generated heat amount-related parameter. As a result, the detection of a failure of the coolant water temperature sensor 72 is executed based on the total of the fuel injection amount which is the first generated heat amount-related parameter. Due to this, the detection of a failure of the coolant water temperature sensor 72 is accurately executed even if the temperature of the coolant water varies in accordance with the total of the fuel injection amount.

The information which relates to the intake air amount as the first generated heat amount-related parameter is information which relates to an intake air amount calculated by the engine controlling unit 91. The engine controlling unit 91 is equivalent to an intake air amount acquisition unit of the present teaching. In order to determine the fuel injection amount, the engine controlling unit 91 calculates the intake air amount based on a signal of the engine rotation speed sensor 71 and either a signal of the throttle opening degree sensor 73 or a signal of the intake pressure sensor 74. When the opening degree of the throttle valve 54 is small, the intake air amount is calculated based on a signal of the engine rotation speed sensor 71 and a signal of the intake pressure sensor 74. When the opening degree of the throttle valve 54 is large, the intake air amount is calculated based on a signal of the engine rotation speed sensor 71 and a signal of the throttle opening degree sensor 73. The information which relates to the intake air amount as the first generated heat amount-related parameter is, for example, an intake air amount, a difference between two intake air amounts, total of an intake air amount, or a combination of them. The intake air amount as the first generated heat amount-related parameter may be an intake air amount at a timing or an average of intake air amounts during a time.

The intake air amount as the first generated heat amount-related parameter is preferably the intake air amount when the integrated value of the rotation speed reaches the predetermined value P. The intake air amount as the first generated heat amount-related parameter may be an intake air amount detected when the integrated value of the engine rotation speed substantially reaches the predetermined value P.

When the air-fuel ratio of the mixture gas is constant, the larger the intake air amount taken into the combustion chamber 28 is, the larger the amount of heat generated in the combustion chamber 28 is. The coolant water temperature sensor failure detection unit 93 determines a correction value for changing the failure determination threshold A. The determination is performed by, for example, comparing the intake air amount with a reference amount. For example, when a result of subtracting the reference amount from the intake air amount is equal to or larger than a predetermined value, an addend is selected as the correction value. Meanwhile, when a result of subtracting the reference amount from the intake air amount is smaller than the predetermined value, zero or a subtrahend is selected as the correction value. The failure determination threshold A is changed based on the intake air amount which is the first generated heat amount-related parameter. As a result, the detection of a failure of the coolant water temperature sensor 72 is executed based on the intake air amount which is the first generated heat amount-related parameter. Due to this, the detection of a failure of the coolant water temperature sensor 72 is accurately executed even if the temperature of the coolant water varies in accordance with the intake air amount.

### [4-5] Specific Example of First Generated Heat Amount Correction Parameter Used for Changing Failure Determination Threshold

The first generated heat amount correction parameters used for changing the failure determination threshold A are, for example, a duration of the idling stop state, whether idling stop has been executed, a fuel cut time, and whether fuel cut control has been executed.

The duration of the idling stop state as the first generated heat amount correction parameter is preferably the total time of the idling stop state in a period from the start of the engine unit 11 to the time when the integrated value of the engine rotation speed reaches the predetermined value P.

No heat is generated by combustion in the idling stop state. Therefore, the longer the duration of the idling stop state is, the less the amount of heat generated in the engine unit 11 is. The coolant water temperature sensor failure detection unit 93 determines a correction value for changing the failure determination threshold A. The determination is performed by, for example, comparing the duration of the idling stop state with a reference time. For example, when a result of subtracting the reference time from the duration of the idling stop state is equal to or larger than a predetermined value, a subtrahend is selected as the correction value. Meanwhile, when a result of subtracting the reference time from the duration of the idling stop state is equal to or larger than the predetermined value, zero is selected as the correction value.

The failure determination threshold A is changed based on the duration of the idling stop state which is the first generated heat amount correction parameter. As a result, the detection of a failure of the coolant water temperature sensor 72 is executed based on the duration of the idling stop state which is the first generated heat amount correction parameter. Due to this, the detection of a failure of the coolant water temperature sensor 72 is accurately executed even if the idling stop has been executed.

In a period from the start of the engine unit 11 to the time when the integrated value of the engine rotation speed reaches the predetermined value P, the idling stop may be executed plural times. In such a case, the duration of the idling stop state as the first generated heat amount correction parameter may be an accumulation of plural durations of the idling stop state, or another value. The duration may be, for example, a value calculated by multiplying an average duration of the idling stop state by a coefficient corresponding to the number of times of the idling stop. Alternatively, the number of times of the idling stop may be used as the first generated heat amount correction parameter.

Whether the idling stop has been executed, as the first generated heat amount correction parameter, is preferably whether the idling stop has been executed when the integrated value of the engine rotation speed reaches the predetermined value P. Whether the idling stop has been executed, as the first generated heat amount correction parameter, may be whether the idling stop has been executed in a period from the start of the engine unit 11 to the time when the integrated value of the engine rotation speed reaches the predetermined value P.

No heat is generated by combustion in the idling stop state. The coolant water temperature sensor failure detection unit 93 determines the correction value for changing the failure determination threshold A, based on whether the idling stop has been executed. For example, when the idling stop has been executed, a subtrahend is selected as the correction value. Meanwhile, when the idling stop has not been executed, zero is selected as the correction value.

The failure determination threshold A is changed based on whether the idling stop has been executed, which is the first generated heat amount correction parameter. As a result, the detection of a failure of the coolant water temperature sensor 72 is executed based on whether the idling stop has been executed, which is the first generated heat amount correction parameter. Due to this, the detection of a failure of the coolant water temperature sensor 72 is accurately executed even if the idling stop has been executed.

The fuel cut time as the first generated heat amount correction parameter is preferably the fuel cut time in a period from the start of the engine unit 11 to the time when the integrated value of the engine rotation speed reaches the predetermined value P.

Heat by combustion is not generated when the fuel cut control is executed. Therefore, the longer the fuel cut time is, the less heat is generated in the engine unit 11. The coolant water temperature sensor failure detection unit 93 determines a correction value for changing the failure determination threshold A. The determination is performed by, for example, comparing the fuel cut time with a reference time. For example, when a result of subtracting the reference time from the fuel cut time is equal to or larger than a predetermined value, a subtrahend is selected as the correction value. For example, when a result of subtracting the reference time from the fuel cut time is smaller than the predetermined value, zero is selected as the correction value.

The failure determination threshold A is changed based on the fuel cut time which is the first generated heat amount correction parameter. As a result, the detection of a failure of the coolant water temperature sensor 72 is executed based on the fuel cut time which is the first generated heat amount correction parameter. Due to this, the detection of a failure of the coolant water temperature sensor 72 is accurately executed even if the fuel cut control is executed.

Whether the fuel cut control has been executed, as the first generated heat amount correction parameter, is preferably whether the fuel cut control has been executed when the integrated value of the engine rotation speed reaches the predetermined value P. Whether the fuel cut control has been executed, as the first generated heat amount correction parameter, may be whether the fuel cut control has been executed in a period from the start of the engine unit 11 to the time when the integrated value of the engine rotation speed reaches the predetermined value P.

Heat by combustion is not generated when the fuel cut control is executed. The coolant water temperature sensor failure detection unit 93 determines the correction value for changing the failure determination threshold A, based on whether the fuel cut control has been executed. For example, when the fuel cut control has been executed, a subtrahend is selected as the correction value. Meanwhile, when the fuel cut control has not been executed, zero is selected as the correction value.

The failure determination threshold A is changed based on the fuel cut which is the first generated heat amount correction parameter. As a result, the detection of a failure of the coolant water temperature sensor 72 is executed based on whether the fuel cut has been executed, which is the first generated heat amount correction parameter. Due to this, the detection of a failure of the coolant water temperature sensor 72 is accurately executed even if the fuel cut control is executed.

The correction value of the failure determination threshold A for each parameter is not limited to the above. When the coolant water temperature sensor failure detection unit 93 corrects the failure determination threshold A based on plural parameters, a single correction value may be determined based on two or more parameters. For example, when the air-fuel ratio of the mixture gas is lean and the fuel injection amount is larger than the reference amount, an addend may optionally be selected as the correction value. The correction value of the failure determination threshold A may be a multiplier or a divisor, instead of an addend or a subtrahend.

The intake temperature sensor failure detection unit 94 detects a failure of the intake temperature sensor 75 by the same process as the coolant water temperature sensor failure detection unit 93. The second dissipated heat amount-related parameter, however, does not include the intake temperature detected by the intake temperature sensor 75. This is because the intake temperature sensor failure detection unit 94 detects a failure of the intake temperature sensor 75. The failure determination threshold A used by the intake temperature sensor failure detection unit 94 may be identical with or different from the failure determination threshold A used by the coolant water temperature sensor failure detection unit 93. The predetermined value P used by the intake temperature sensor failure detection unit 94 may be identical with or different from the predetermined value P used by the coolant water temperature sensor failure detection unit 93. The types of the parameters used by the intake temperature sensor failure detection unit 94 for changing the failure determination threshold A may be identical with or different from those used by the coolant water temperature sensor failure detection unit 93.

Hereinafter, the coolant water temperature sensor failure detection unit 93 and the intake temperature sensor failure detection unit 94 are collectively termed as temperature sensor failure detection units 93 and 94. Furthermore, the first generated heat amount-related parameter and the second generated heat amount-related parameter will be collectively termed as generated heat amount-related parameters. Furthermore, the first dissipated heat amount-related parameter and the second dissipated heat amount-related parameter will be collectively termed as dissipated heat amount-related parameters. Furthermore, the coolant water temperature sensor 72 and the intake temperature sensor 75 will be collectively termed as temperature sensors 72 and 75,

### [5] Characteristics of Present Embodiment

The temperature of a detection target of the coolant water temperature sensor 72 is influenced by the first generated heat amount generated in the engine unit 11 and the first dissipated heat amount taken away from the motorcycle 1. The coolant water temperature sensor failure detection unit 93 detects a failure of the coolant water temperature sensor 72 based on at least one signal from the coolant water temperature sensor 72, at least one first generated heat amount-related parameter, and at least one first dissipated heat amount-related parameter. The first generated heat amount-related parameter relates to the amount of heat generated in the engine unit 11 and influencing the temperature of the detection target of the coolant water temperature sensor 72. Furthermore, the first generated heat amount-related parameter further relates to the state of the motorcycle 1. The first dissipated heat amount-related parameter relates to a dissipated heat amount taken away from the motorcycle 1 as the motorcycle 1 runs and influencing the temperature of a detection target of the coolant water temperature sensor 72. The first generated heat amount-related parameter and the first dissipated heat amount-related parameter further relate to the circumference of the motorcycle 1. The coolant water temperature sensor failure detection unit 93 detects a failure of the coolant water temperature sensor 72 by using both a parameter related to the amount of heat generated in the engine unit 11 and a parameter related to the amount of dissipated heat taken away from the motorcycle 1. Due to this, even if the temperature of a detection target of the coolant water temperature sensor 72 is changed by influences of the first generated heat amount and the first dissipated heat amount, it is possible to restrain the frequency of erroneous detection that the normal state is erroneously detected as a failure. As a result, the detection of a failure of the coolant water temperature sensor 72 is further accurately executed. The accuracy of the failure detection is therefore improved as compared to cases where failure detection is executed without using the generated heat amount-related parameter and the dissipated heat amount-related parameter.

Furthermore, because of the improvement in the detection accuracy, a failure can be detectable based on fewer signals. The failure detection is therefore completed soon as compared to cases where failure detection is executed without using the generated heat amount-related parameter and the dissipated heat amount-related parameter.

This applies to the detection of a failure of the intake temperature sensor 75 by the intake temperature sensor failure detection unit 94, too.

The coolant water temperature sensor failure detection unit 93 is configured to detect a failure of the coolant water temperature sensor 72 by comparing the determination value (T1-T0) derived based on at least a signal of the temperature sensor 72 with the failure determination threshold A. The failure determination threshold A is changed based on the first dissipated heat amount-related parameter. When the first dissipated heat amount-related parameter is changed so that the first dissipated heat amount increases, the coolant water temperature sensor failure detection unit 93 changes the failure determination threshold A so as to decrease. When the first dissipated heat amount-related parameter is changed so that the first dissipated heat amount decreases, the coolant water temperature sensor failure detection unit 93 changes the failure determination threshold A so as to increase. When the first dissipated heat amount increases, the temperature of a detection target of the coolant water temperature sensor 72 may decrease. When the first dissipated heat amount decreases, the temperature of a detection target of the coolant water temperature sensor 72 may increase. Therefore, when the temperature of the detection target changes in accordance with a change of the first dissipated heat amount, the coolant water temperature sensor failure detection unit 93 changes the failure determination threshold A in accordance with the temperature change. This improves the accuracy of the detection of a failure of the coolant water temperature sensor 72.

This applies to the detection of a failure of the intake temperature sensor 75 by the intake temperature sensor failure detection unit 94, too.

The failure determination threshold A may be changed based on the first generated heat amount-related parameter. In this case, when the first generated heat amount-related parameter is changed so that the first generated heat amount increases, the coolant water temperature sensor failure detection unit 93 changes the failure determination threshold A so as to increase. When the first generated heat amount-related parameter is changed so that the first generated heat amount increases, the coolant water temperature sensor failure detection unit 93 changes the failure determination threshold A so as to decrease. When the first generated heat amount increases, the temperature of a detection target of the coolant water temperature sensor 72 increases. When the first generated heat amount decreases, the temperature of a detection target of the coolant water temperature sensor 72 may decrease. When the temperature of the detection target changes in accordance with a change of the first generated heat amount, the coolant water temperature sensor failure detection unit 93 changes the failure determination threshold A in accordance with the temperature change. This improves the accuracy of the detection of a failure of the coolant water temperature sensor 72.

This applies to the detection of a failure of the intake temperature sensor 75 by the intake temperature sensor failure detection unit 94, too.

The coolant water temperature sensor failure detection unit 93 detects a failure of the temperature sensor 72 based on a difference (T1-T0) between two detected temperatures detected by the temperature sensor 72. A change of the detected temperature can be grasped from the difference between the two detected temperatures. This further improves the accuracy of the detection of a failure of the coolant water temperature sensor 72.

This applies to the detection of a failure of the intake temperature sensor 75 by the intake temperature sensor failure detection unit 94, too.

The first dissipated heat amount-related parameter relates to at least one of the flow rate of the air flow received by the motorcycle 1, the outside temperature, and the state of wetting of the motorcycle 1. The higher the flow rate of the air flow received by the motorcycle 1 is, the larger the amount of heat taken away from the motorcycle 1 increases is. Furthermore, the lower the outside temperature is, the larger the amount of heat is taken away from the motorcycle 1 is. Furthermore, when the motorcycle 1 is wet, a large amount of heat is taken away from the motorcycle 1. As such, the first dissipated heat amount-related parameter significantly relates to the amount of heat taken away from the motorcycle 1. The accuracy of the detection of a failure of the coolant water temperature sensor 72 is therefore further improved by using the first dissipated heat amount-related parameter.

This applies to the detection of a failure of the intake temperature sensor 75 by the intake temperature sensor failure detection unit 94, too.

The motorcycle 1 includes the engine controlling unit 91, the battery 16, and the main switch 17. The engine controlling unit 91 controls the driving of the engine unit 11. The battery 16 stores power which is supplied to the temperature sensor failure detection units 93 and 94 and the engine controlling unit 91. The main switch 17 is turned on to supply the power from the battery 16 to the engine controlling unit 91. The main switch 17 is turned off to stop the supply of the power from the battery 16 to the engine controlling unit 91. The temperature sensor failure detection units 93 and 94 determine whether there is a failure in the temperature sensors 72 and 75 when the main switch 17 is turned on, and do not determine whether there is a failure in the temperature sensors 72 and 75 when the main switch 17 is turned off. To put it differently, the temperature sensor failure detection units 93 and 94 detect a failure of the temperature sensors 72 and 75 only when the power is supplied from the battery 16 to the engine controlling unit 91. It is therefore unnecessary to supply the power from the battery 16 to the temperature sensor failure detection units 93 and 94 for failure detection when the power is not supplied from the battery 16 to the engine controlling unit 91. The consumption of the power stored in the battery 16 is restrained for this reason.

### <Second Embodiment>

The following describes Second Embodiment of the present teaching. It is noted that items identical with those in First Embodiment above are indicated by the same reference numerals and detailed descriptions thereof are suitably omitted. A motorcycle 1 of the present embodiment is identical with that of First Embodiment except a method of detecting a failure by the coolant water temperature sensor failure detection unit 93 and the intake temperature sensor failure detection unit 94. The following only describes matters different from First Embodiment.

The coolant water temperature sensor failure detection unit 93 of Second Embodiment calculates a correction determination value ΔT2 by correcting a difference (T1-T0) of detected temperatures based on at least one first dissipated heat amount-related parameter. The correction determination value ΔT2 may be a value calculated by correcting the difference (T1-T0) of detected temperatures based on at least one first dissipated heat amount-related parameter and at least one first generated heat amount-related parameter. The correction determination value ΔT2 may be a value calculated by correcting the difference (T1-T0) of detected temperatures based on at least one first dissipated heat amount-related parameter, at least one first generated heat amount-related parameter, and at least one first generated heat amount correction parameter. Instead of correcting the difference (T1-T0) of detected temperatures, the correction determination value ΔT2 may be calculated by correcting one of the detected temperature T1 and the detected temperature T0.

The coolant water temperature sensor failure detection unit 93 detects a failure of the coolant water temperature sensor 72 by comparing the correction determination value ΔT2 with the failure determination threshold A. When the correction determination value ΔT2 is smaller than the failure determination threshold A, it is determined that there is a failure of the coolant water temperature sensor 72. When the correction determination value ΔT2 is equal to or larger than the failure determination threshold A, it is determined that there is no failure of the coolant water temperature sensor 72. The correction determination value ΔT2 is a value which is determined when the integrated value of the engine rotation speed, which is the first generated heat amount-related parameter, satisfies a predetermined condition and is changed based on the first dissipated heat amount-related parameter. The correction determination value ΔT2 is therefore equivalent to a third determination value of the present teaching and the failure determination threshold A is equivalent to a third failure determination threshold of the present teaching. The failure determination threshold A may be or may not be changed.

A specific example of the first dissipated heat amount-related parameter used for corresponding a difference (T1-T0) of detected temperatures is identical with the specific example of the first dissipated heat amount-related parameter used for changing the failure determination threshold A in First Embodiment. Furthermore, a specific example of the first generated heat amount-related parameter used for corresponding a difference (T1-T0) of detected temperatures is identical with the specific example of the first generated heat amount-related parameter used for changing the failure determination threshold A in First Embodiment. A specific example of the first generated heat amount correction parameter used for corresponding a difference (T1-T0) of detected temperatures is identical with the specific example of the first generated heat amount correction parameter used for changing the failure determination threshold A in First Embodiment.

The following describes a case where a vehicle speed is used as a first dissipated heat amount-related parameter for correcting a difference (T1-T0) of detected temperatures. The coolant water temperature sensor failure detection unit 93 determines a correction value for correcting the difference (T1-T0) of detected temperatures. The determination is performed by comparing a vehicle speed with a reference speed. For example, when a result of subtracting the reference speed from the vehicle speed is equal to or higher than a predetermined value, an addend is selected as the correction value. Meanwhile, when a result of subtracting the reference speed from the vehicle speed is lower than the predetermined value, zero or a subtrahend is selected as the correction value.

The following describes a case where an engine rotation speed is used as a first generated heat amount-related parameter for correcting a difference (T1-T0) of detected temperatures. The coolant water temperature sensor failure detection unit 93 determines a correction value for correcting the difference (T1-T0) of detected temperatures. The determination is performed by comparing the engine rotation speed with a referential rotation speed. For example, when a result of subtracting the reference rotation speed from the engine rotation speed is equal to or higher than a predetermined value, a subtrahend is selected as the correction value. Meanwhile, when a result of subtracting the reference rotation speed from the engine rotation speed is lower than the predetermined value, zero or an addend is selected as the correction value.

The following describes a case where a duration of the idling stop state is used as a first generated heat amount correction parameter for correcting a difference (T1-T0) of detected temperatures. The coolant water temperature sensor failure detection unit 93 determines a correction value for correcting the difference (T1-T0) of detected temperatures. The determination is performed by comparing the duration of the idling stop state with a reference time. For example, when a result of subtracting the reference time from the duration of the idling stop state is equal to or larger than a predetermined value, an addend is selected as the correction value. Meanwhile, when a result of subtracting the reference time from the duration of the idling stop state is smaller than the predetermined value, zero is selected as the correction value.

The coolant water temperature sensor failure detection unit 93 determines a correction value for correcting the difference (T1-T0) of detected temperatures, for each parameter. When the coolant water temperature sensor failure detection unit 93 corrects the difference (T1-T0) of detected temperatures based on plural parameters, a single correction value may be determined based on two or more parameters. The correction value may be a multiplier or a divisor, instead of an addend or a subtrahend.

The intake temperature sensor failure detection unit 94 of Second Embodiment detects a failure of the intake temperature sensor 75 by the same process as the coolant water temperature sensor failure detection unit 93 of the present embodiment. The second dissipated heat amount-related parameter, however, does not include the intake temperature detected by the intake temperature sensor 75. The failure determination threshold A used by the intake temperature sensor failure detection unit 94 is different from the failure determination threshold A used by the coolant water temperature sensor failure detection unit 93 of the present embodiment. The predetermined value P used by the intake temperature sensor failure detection unit 94 may be identical with or different from the predetermined value P used by the coolant water temperature sensor failure detection unit 93. The types of the parameters used in the intake temperature sensor failure detection unit 94 for correcting the difference (T1-T0) of detected temperatures by the intake temperature sensor 75 may be identical with or different from those used in the coolant water temperature sensor failure detection unit 93.

The temperature sensor failure detection unit 93 calculates the correction determination value ΔT2 by changing the difference (T1-T0) of detected temperatures based on at least one first generated heat amount-related parameter and at least one first dissipated heat amount-related parameter. It is therefore not necessary to change the failure determination threshold A based on a parameter. As a result, the detection of a failure of two temperature sensors 72 and 75 is possible by a single failure determination threshold A. Furthermore, because the failure determination threshold A is not changed, this failure determination threshold A can be used for another control which is different from the detection of a failure of a temperature sensor.

Preferred embodiments of the present teaching have been described above. However, the present teaching is not limited to the above-described embodiments, and various changes can be made within the scope of the claims. Further, modifications described below may be used in combination as needed. For example, the term "preferably" or "preferable" herein is non-exclusive and means "preferably/preferable, but not limited to."

In First and Second Embodiments above, the engine driving time as a generated heat amount-related parameter does not include the fuel cut time. Alternatively, the engine driving time including the fuel cut time may be used as a generated heat amount-related parameter. Furthermore, the total of the engine driving time and the idling stop time may be used as a generated heat amount-related parameter.

In First and Second Embodiments above, the integrated value of the engine rotation speed as a generated heat amount-related parameter is the integral excluding the engine rotation speed when the fuel cut control is executed. Alternatively, an integrated value of the engine rotation speed calculated with the inclusion of the engine rotation speed when the fuel cut control is executed may be used as a generated heat amount-related parameter.

In First and Second Embodiments above, the determination value compared with the failure determination threshold A is determined when the integrated value of the engine rotation speed reaches the predetermined value P. In other words, the determination value compared with the failure determination threshold A is determined when the integrated value of the engine rotation speed satisfies a predetermined condition. The determination value compared with the failure determination threshold A may be determined when a generated heat amount-related parameter which is different from the integrated value of the engine rotation speed satisfies a predetermined condition.

The following describes a case where a determination value (T1-T0) compared with the failure determination threshold A is determined based on a generated heat amount-related parameter which is different from the integrated value of the engine rotation speed. The detected temperature T1 may be, for example, a temperature detected when the engine driving time reaches a predetermined time.

When this modification is applied to First Embodiment, the engine driving time is excluded from the specific examples of the generated heat amount-related parameters used for changing the failure determination threshold A. Instead, the integrated value of the engine rotation speed is added. When the integrated value of the engine rotation speed is large, the total amount of heat generated in the engine unit 11 is large. The coolant water temperature sensor failure detection units 93 and 94 determine a correction value for changing the failure determination threshold A. The determination is performed by, for example, comparing the integrated value of the engine rotation speed as a generated heat amount-related parameter with a reference value. For example, when a result of subtracting the reference value from the integrated value of the engine rotation speed is equal to or larger than a predetermined value, an addend is selected as the correction value. Meanwhile, when a result of subtracting the reference value from the integrated value of the engine rotation speed is smaller than the predetermined value, zero or a subtrahend is selected as the correction value. The failure determination threshold A is changed based on the integrated value of the engine rotation speed which is a generated heat amount-related parameter. As a result, the detection of a failure of the coolant water temperature sensors 72 and 75 is executed based on the integrated value of the engine rotation speed, which is a generated heat amount-related parameter. Due to this, the detection of a failure of the coolant water temperature sensors 72 and 75 is accurately executed even if the temperature of the coolant water of the temperature sensors 72 and 75 varies in accordance with the engine rotation speed.

When this modification is applied to Second Embodiment, the engine driving time is excluded from the specific examples of the generated heat amount-related parameters used for correcting the difference (T1-T0) of detected temperatures. Instead, the integrated value of the engine rotation speed is added. The coolant water temperature sensor failure detection units 93 and 94 determine a correction value for correcting the difference (T1-T0) of detected temperatures. The determination is performed by, for example, comparing the integrated value of the engine rotation speed as a generated heat amount-related parameter with a reference value. For example, when a result of subtracting the reference value from the integrated value of the engine rotation speed is equal to or larger than a predetermined value, a subtrahend is selected as the correction value. Meanwhile, when a result of subtracting the reference value from the integrated value of the engine rotation speed is smaller than the predetermined value, the correction value is zero or an addend. The determination value to be compared with the failure determination threshold A is changed based on the integrated value of the engine rotation speed which is a generated heat amount-related parameter. As a result, the detection of a failure of the coolant water temperature sensors 72 and 75 is executed based on the integrated value of the engine rotation speed, which is a generated heat amount-related parameter. Due to this, the detection of a failure of the coolant water temperature sensors 72 and 75 is accurately executed even if the temperature of the coolant water of the temperature sensors 72 and 75 varies in accordance with the engine rotation speed.

In First and Second Embodiments above, by utilizing the increase in temperature of detection targets of the temperature sensors 72 and 75, the detection of a failure of the temperature sensors 72 and 75 is executed. Alternatively, the detection of a failure of the temperature sensors 72 and 75 may be executed by utilizing the decrease in temperature of detection targets of the temperature sensors 72 and 75. For example, a temperature difference between a temperature detected when the driving of the engine unit 11 is stopped and a temperature detected at a predetermined timing after the stop of the engine unit 11 is calculated. The failure detection may be executed by comparing the calculated temperature difference with a predetermined failure determination threshold. The stop of the driving of the engine unit 11 may be stop of the driving of the engine unit due to the execution of the idling stop. At the predetermined timing, the main switch 17 is preferably kept in the on state. In this modification, the failure detection process is preferably avoided when the temperature detected first is lower than a predetermined temperature.

In First and Second Embodiments above, it is determined that there is a failure in the temperature sensors 72 and 75 when the determination value compared with the failure determination threshold A is smaller than the failure determination threshold A. Alternatively, it is determined that there is a failure when the determination value compared with the failure determination threshold A is equal to or larger than the failure determination threshold, and it is determined that there is no failure when the determination value is smaller than the threshold. Alternatively, it is determined that there is a failure when the determination value is out of a predetermined numerical range, and it is determined that there is no failure when the determination value is in the numerical range. In this case, the predetermined numerical range is equivalent to the failure determination threshold of the present teaching.

In First and Second Embodiments above, the determination value compared with the failure determination threshold A is a difference between detected temperatures. In other words, the determination value is derived based on two signals from a temperature sensor. In this regard, the number of signals of a temperature sensor used for determining the determination value is not limited to two. For example, a temperature detected when a generated heat amount-related parameter satisfies a predetermined condition may be used as the determination value. The detection of a failure of the temperature sensor may be executed by comparing this determination value with a failure determination threshold B. The failure determination threshold B is determined based on the other one of the dissipated heat amount-related parameters.

In First Embodiment above, the determination value (T1-T0) compared with the failure determination threshold A is determined when a generated heat amount-related parameter satisfies a predetermined condition. Alternatively, the determination value compared with the failure determination threshold A may be determined when a dissipated heat amount-related parameter satisfies a predetermined condition. In this case, the failure determination threshold A is determined based on at least a generated heat amount-related parameter.

In First Embodiment above, the failure determination threshold A is changed based on a dissipated heat amount-related parameter. Alternatively, the failure determination threshold A may be determined when a dissipated heat amount-related parameter satisfies a predetermined condition. The following describes a specific example of this case. When the integrated value of the engine rotation speed reaches the predetermined value P, the determination value (T1-T0) is determined. Thereafter, when the vehicle speed reaches a predetermined speed or higher, the failure determination threshold A is determined and failure detection is executed. When the vehicle speed has not reached the predetermined speed, the failure determination threshold A is not determined and failure detection is not executed.

When the determination value is determined based on a dissipated heat amount-related parameter, the failure determination threshold may be determined when a generated heat amount-related parameter satisfies a predetermined condition.

In First Embodiment above, the determination value compared with the failure determination threshold A is determined when the generated heat amount-related parameter satisfies a predetermined condition. Alternatively, the determination value compared with the failure determination threshold A may be changed based on the generated heat amount-related parameter. In other words, the determination value compared with the failure determination threshold A may be a value which is generated by changing, based on the generated heat amount-related parameter, a value calculated from a signal of the temperature sensor.

When the failure determination threshold A is determined based on a generated heat amount-related parameter, the determination value compared with the failure determination threshold A may be changed based on the dissipated heat amount-related parameter.

In Second Embodiment above, the correction determination value ΔT2 compared with the failure determination threshold A is determined when the generated heat amount-related parameter satisfies a predetermined condition and is changed based on the dissipated heat amount-related parameter. Alternatively, the determination value may be determined when the dissipated heat amount-related parameter satisfies a predetermined condition, and changed based on the generated heat amount-related parameter. Alternatively, the determination value may be changed based on the generated heat amount-related parameter and the dissipated heat amount-related parameter. Alternatively, the determination value may be determined when the generated heat amount-related parameter and the dissipated heat amount-related parameter both satisfy predetermined conditions. To be more specific, for example, a temperature detected when the engine driving time is equal to or longer than a predetermined time and the integrated value of the engine rotation speed reaches the predetermined value P may be used as the determination value.

In First and Second Embodiments above, the determination value compared with the failure determination threshold A is determined based on the generated heat amount-related parameter. Alternatively, the determination value compared with the failure determination threshold A may be derived based on a signal of the temperature sensor irrespective of the generated heat amount-related parameter and the dissipated heat amount-related parameter. In this case, the failure determination threshold A is determined based on the generated heat amount-related parameter and the dissipated heat amount-related parameter. To be more specific, the failure determination threshold A may be changed based on the generated heat amount-related parameter and the dissipated heat amount-related parameter. Alternatively, the failure determination threshold A may be determined when the generated heat amount-related parameter and the dissipated heat amount-related parameter both satisfy predetermined conditions. Alternatively, the failure determination threshold A may be determined when the generated heat amount-related parameter satisfies a predetermined condition, and changed based on the dissipated heat amount-related parameter. Alternatively, the failure determination threshold A may be determined when the dissipated heat amount-related parameter satisfies a predetermined condition, and changed based on the generated heat amount-related parameter. In this modification, the failure determination threshold A is equivalent to the first failure determination threshold of the present teaching. The determination value compared with the failure determination threshold A is equivalent to the first determination value of the present teaching.

The temperature sensor failure detection units 93 and 94 of First and Second Embodiments do not execute failure detection until the integrated value of the engine rotation speed reaches the predetermined value P after the start of the engine unit 11. Alternatively, it may be determined that there is no failure of the temperature sensors 72 and 75 after the start of the engine unit 11 and before the integrated value of the engine rotation speed reaches the predetermined value P. The following describes a specific example of this case. After the start of the engine unit 11, temperatures detected by the temperature sensor 72 at predetermined intervals are termed detected temperatures T3. Each time the detected temperature T3 is detected, a difference (T3-T0) between the detected temperature T3 and the detected temperature T0 at the start of the engine is compared with the failure determination threshold A. When the difference (T3-T0) between the detected temperatures reaches the failure determination threshold A, it is determined at this stage that there is no failure of the temperature sensor 72. When determined that there is no failure, the failure detection is not executed until the next start of the engine unit 11. When the difference (T3-T0) between the detected temperatures does not reach the failure determination threshold A until the integrated value of the engine rotation speed reaches the predetermined value P, it is determined that there is a failure of the temperature sensor 72 when the integrated value of the engine rotation speed reaches the predetermined value P. According to this modification, the failure detection is swiftly finished when there is no failure.

The temperature sensor failure detection units 93 and 94 may detect a failure of the temperature sensors 72 and 75 based on signals of the temperature sensors 72 and 75 at the start of the engine unit 11, in addition to the failure detection described in First or Second Embodiment above. For example, when temperatures detected by the temperature sensors 72 and 75 at the start of the engine unit 11 are out of a predetermined normal range, it is determined that there is a failure of the temperature sensors 72 and 75. Meanwhile, failure detection is executed in the same manner as in First or Second Embodiment when temperatures detected by the temperature sensors 72 and 75 at the start of the engine unit 11 are within the predetermined normal range.

In First and Second Embodiments above, the fuel cut control is always executed when the ignition cut control is executed. Alternatively, the ignition cut control may be executed without the fuel cut control. According to this modification, the integrated value of the engine rotation speed as the generated heat amount-related parameter is preferably calculated without including the engine rotation speed when the fuel cut control is executed and the engine rotation speed when the ignition cut control is executed. Furthermore, the engine driving time as the generated heat amount-related parameter is preferably calculated without including the duration of the fuel cut control and the duration of the ignition cut control. Furthermore, when the ignition cut control is executed without the fuel cut control, whether the ignition cut control has been executed and the duration of the ignition cut control may be included in the specific examples of the dissipated heat amount-related parameters. Furthermore, whether the ignition cut control has been executed and the duration of the ignition cut control may be included in the specific examples of the generated heat amount correction parameters.

The motorcycle 1 may include a wet acquisition unit which is able to obtain the state of wetting of the motorcycle 1. For example, the wet acquisition unit estimates the state of wetting of the motorcycle 1 based on a signal of a temperature sensor which is not a target of failure detection. When, for example, a temperature detected by this temperature sensor is significantly lower than a temperature estimated based on the operating state of the engine unit 11, the wet acquisition unit determines that the motorcycle is wet. The temperature estimated based on the operating state of the engine unit 11 is, for example, a temperature estimated from the integrated value of the engine rotation speed. When the motorcycle 1 includes a wet detection unit, the dissipated heat amount-related parameter may be information which relates to the state of wetting of the motorcycle 1. The dissipated heat amount-related parameter may be the presence/absence of wetting of the motorcycle 1. The dissipated heat amount-related parameter may be information which relates to the degree of wetting of the motorcycle 1.

In First and Second Embodiments above, the engine unit 11 is started as the rider switches the engine start switch 18A. Alternatively, the engine unit 11 may be started as the rider operates a kick starter pedal by a foot. The motorcycle may be provided with both the kick starter pedal and the engine start switch 18A. A motorcycle with a kick starter pedal may or may not include the starter motor 38. When a motorcycle has a kick starter pedal, the engine driving time as the generated heat amount-related parameter or the dissipated heat amount-related parameter may be a time counted from the operation the kick starter pedal.

The engine unit 11 of First and Second Embodiments is a three-cylinder engine. Alternatively, the engine unit of the present teaching may be a multi-cylinder engine with two cylinders or four or more cylinders, or may be a single-cylinder engine.

The engine unit 11 of First and Second Embodiments is a four-stroke one-cycle engine. Alternatively, the engine unit of present teaching may be a two-stroke one-cycle engine.

The engine main body 20 of First and Second Embodiments is mostly exposed to the outside (see FIG. 1). As long as a part of the engine unit is exposed to the outside, the engine main body may be covered with a cover when viewed in the vehicle width direction.

As a fuel supplier, the engine unit 11 may include a carburetor instead of the injector 35. The carburetor is a device for supplying fuel to the combustion chamber 28 by utilizing a negative pressure of the combustion chamber 28.

In addition to the coolant water temperature sensor 72 configured to detect the temperature of the coolant water in the cooling passage 22b, a second coolant water temperature sensor may be provided to detect the temperature of the coolant water. The second coolant water temperature sensor may be provided, for example, to detect the temperature of the coolant water at a part different from the cooling passage 22b of the engine main body 20. Alternatively, the second temperature sensor may be provided, for example, to detect the temperature of the coolant water in the water cooling unit 40. A method of detecting a failure of the second coolant water temperature sensor is substantially identical with the method of detecting a failure of the coolant water temperature sensor 72.

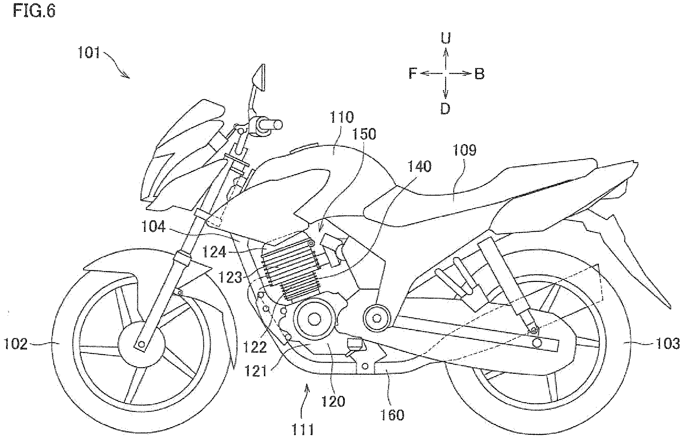

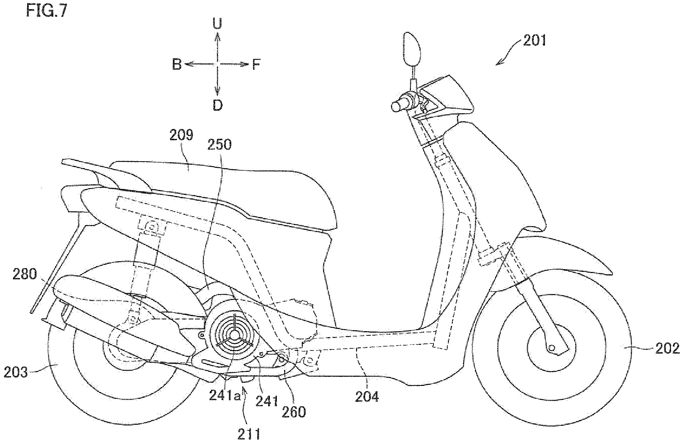

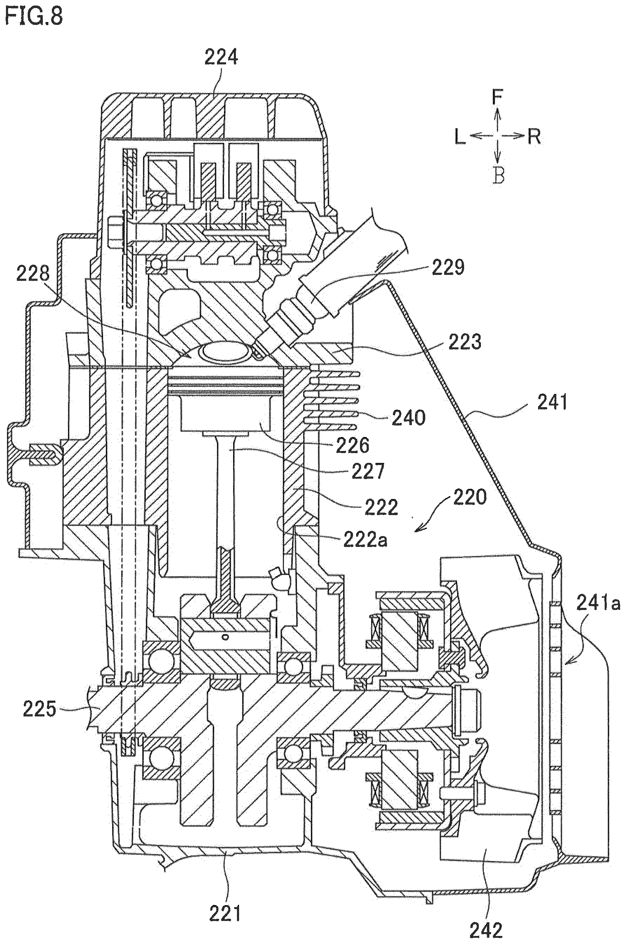

The engine unit 11 of First and Second Embodiments above is a water-cooled engine unit. Alternatively, the engine unit of the present teaching may be a natural air-cooled engine unit or a forced air-cooled engine unit. FIG. 6 shows an example of a motorcycle with a natural air-cooled engine unit. FIG. 7 and FIG. 8 show examples of a motorcycle with a forced air-cooled engine unit.

A motorcycle 101 shown in FIG. 6 includes a front wheel 102, a rear wheel 103, and a vehicle body frame 104. The vehicle body frame 104 supports a seat 109, a fuel tank 110, and an engine unit 111. The engine unit 111 includes an engine main body 120, an intake unit 150, and an exhaust unit 160. The engine main body 120 includes a crankcase 121, a cylinder body 122, a cylinder head 123, and a head cover 124. A plurality of fins 140 are formed on the outer surfaces of the cylinder body 122 and the cylinder head 123. The fins 140 increase the surface area of the engine main body 120. This facilitates heat transfer from the engine main body 120 to the atmosphere.

A motorcycle 201 shown in FIG. 7 includes a front wheel 202, a rear wheel 203, and a vehicle body frame 204. The vehicle body frame 204 supports a seat 209, a fuel tank (not illustrated), and a swing-type engine unit 211. The engine unit 211 includes an engine main body 220 (see FIG. 8), a shroud 241, a fan 242 (see FIG. 8), a gearbox 280, an intake unit 250, and an exhaust unit 260. As shown in FIG. 8, the engine main body 220 includes a crankcase 221, a cylinder body 222, a cylinder head 223, and a head cover 224. The shroud 241 covers a part of the engine main body 220. To be more specific, the shroud 241 covers a right part of the crankcase 221 and the whole circumferences of the cylinder body 222 and the cylinder head 223. An air inlet 241a and an air outlet (not illustrated) are formed in the shroud 241. The fan 242 is provided at a position which is inside the shroud 241 and opposes the air inlet 241 a. The fan 242 is connected to a crankshaft 225. The fan 242 is driven by the crankshaft 225. An air flow sucked into the shroud 241 by the rotation of the fan 242 collides with the engine main body 220. This air flow takes heat away from the engine main body 220. A plurality of fins 240 are formed on the outer surfaces of the cylinder body 222 and the cylinder head 223. Members 222a, 226, 227, 228, and 229 shown in FIG. 8 are a cylinder hole, a connecting rod, a piston, a combustion chamber, and an ignition plug, respectively. The fan 242 may be driven by a fan motor. The fan 242 may be switched between a mode in which the fan is rotated by a driving force from the crankshaft 225 and a mode in which the fan is rotated by a driving force from the fan motor. The fan motor is controlled by an ECU 90.

When a forced air-cooled engine unit 211 is provided, information which relates to the rotation speed of the fan 242 or the rotation time of the fan 242 may be used as a dissipated heat amount-related parameter. The information which relates to the rotation speed of the fan 242 is, for example, the rotation speed of the fan 242, the integrated value of the rotation speed of the fan 242, or the differential value of the rotation speed of the fan 242.

Heat is taken away from the engine unit 211 by the rotation of the fan 242. Heat is particularly taken away from the engine main body 220 by the rotation of the fan 242. The higher the rotation speed of the fan 242 is, the larger the amount of heat taken away from the engine unit 211 is. When the integrated value of the rotation speed of the fan 242 is large, the total amount of heat taken away from the engine unit 211 is large. When the differential value of the rotation speed of the fan 242 is positive and large, the total amount of heat taken away from the engine unit 211 is large. When the rotation time of the fan 242 is long, the total amount of heat taken away from the engine unit 11 is large. The fan 242 is equivalent to a "fan configured to generate an air flow for cooling an engine main body" of the present teaching.

An air-cooled engine unit, which is, for example, shown in FIG. 6 to FIG. 8, includes an engine temperature sensor which is configured to detect the temperature of the engine main body instead of the coolant water temperature sensor. To be more specific, the engine temperature sensor detects the temperature of a crankcase (121, 221), a cylinder body (122, 222), or a cylinder head (123, 124). An ECU of a motorcycle with an air-cooled engine unit may detect a failure of an engine temperature sensor. A method of detecting a failure of the engine temperature sensor is more or less identical with the failure detection method for the coolant water temperature sensor 72.

The motorcycle 1 may include an oil temperature sensor which is configured to detect a temperature of lubrication oil. In this case, the sensor failure detection unit 92 of the ECU 90 may detect a failure of the oil temperature sensor. A method of detecting a failure of the oil temperature sensor is more or less identical with the failure detection method for the coolant water temperature sensor 72.

The motorcycle 1 may include an exhaust gas temperature sensor which is configured to detect a temperature of exhaust gas exhausted from the combustion chamber 28. In this case, the sensor failure detection unit 92 of the ECU 90 may detect a failure of the exhaust gas temperature sensor. A method of detecting a failure of the exhaust gas temperature sensor is substantially identical with the failure detection method for the coolant water temperature sensor 72.

The motorcycle 1 may include a catalyst temperature sensor which is configured to detect a temperature of exhaust gas in the muffler member 63 or a temperature of the catalyst 64. The muffler member 63 is equivalent to a catalyst portion of the present teaching. In this case, the sensor failure detection unit 92 of the ECU 90 may detect a failure of the catalyst temperature sensor. A method of detecting a failure of the catalyst temperature sensor is more or less identical with the failure detection method for the coolant water temperature sensor 72. The catalyst temperature sensor configured to detect the temperature of the exhaust gas in the muffler member 63 also functions as an exhaust gas temperature sensor configured to detect a temperature of the exhaust gas exhausted from the combustion chamber 28.

The motorcycle 1 may include an outside air temperature sensor which is configured to detect a temperature of air outside the engine unit 11. According to this modification, the outside temperature detected by the outside air temperature sensor may be added to the specific examples of the dissipated heat amount-related parameters used by the temperature sensor failure detection units 93 and 94. Furthermore, in this modification, the sensor failure detection unit 92 of the ECU 90 of the motorcycle 1 may detect a failure of the outside air temperature sensor. A method of detecting a failure of the outside air temperature sensor is more or less identical with the failure detection method for the intake temperature sensor 75.

The gearbox 80 of the embodiments above has six gear positions, namely the first speed to the sixth speed, as gear positions other than a neutral position. However, the number of gear positions of the gearbox 80 which are different from the neutral position is not limited to six. The number of gear positions of the gearbox 80 other than the neutral position may be two or more and five or less, or may be seven or more.

The motorcycle 1 of each of First and Second Embodiments employs manual transmission as the transmission. The manual transmission is transmission in which the gear position is changed as the rider operates the clutch lever and the shift pedal. The transmission of the straddled vehicle of the present teaching, however, is not limited to the manual transmission. The transmission of the straddled vehicle of the present teaching may be fully automatic transmission, semi-automatic transmission, or continuously variable transmission. The fully automatic transmission is transmission in which the gear position is switched as the shift actuator is automatically driven in accordance with the vehicle speed the engine rotation speed, etc. The semi-automatic transmission is transmission in which only the clutch operation is automated. The continuously variable transmission is transmission in which the transmission ratio is continuously variable without switching the gear. In the continuously variable transmission, the rider operates only the accelerator. In the continuously variable transmission, the transmission ratio is automatically changed in accordance with the degree of operation of the accelerator by the rider, the vehicle speed, the driving load, etc. A scooter-type motorcycle 201 shown in FIG. 7 and FIG. 8 employs the continuously variable transmission. The gear position sensor is not provided when the continuously variable transmission is employed. When the continuously variable transmission is employed, the straddled vehicle may include a transmission ratio acquisition unit which is configured to acquire the current transmission ratio of the transmission. Information of the transmission ratio acquired by the transmission ratio acquisition unit may be used as a dissipated heat amount-related parameter.

The specific examples of the generated heat amount-related parameters are not limited to those described in First and Second Embodiments above. Likewise, the specific examples of the dissipated heat amount-related parameters are not limited to those described in First and Second Embodiments above.

The method of detecting a failure of a temperature sensor by the failure detector of the present teaching is not limited to those described in First and Second Embodiments and the modifications above, as long as the detection is carried out based on at least one generated heat amount-related parameter, at least one dissipated heat amount-related parameter, and a signal of a temperature sensor.

The straddled vehicle of the present teaching is not limited to the motorcycles described in First and Second Embodiments above and the modifications shown in FIG. 6 to FIG. 8. The straddled vehicle indicates all types of vehicles on which an occupant rides in a manner of straddling on a saddle. The straddled vehicle to which the present teaching is applied includes motorcycles, tricycles, four-wheeled buggies (ATVs: All Terrain Vehicles), personal water crafts, snowmobiles, and the like.

### [Reference Signs List]

1, 101, 201 motorcycle (straddled vehicle)
11, 111, 211 engine unit
16 battery
17 main switch
19 vehicle speed sensor
20, 120, 220 engine main body
28, 228 combustion chamber
29, 229 ignition plug (ignition device)
30 ignition coil (ignition device)
35 injector (fuel supplier)
42 radiator fan (fan)
63 muffler member (catalyst portion)
64 catalyst
71 engine rotation speed sensor
72 coolant water temperature sensor
75 intake temperature sensor (outside air temperature sensor)
76 oxygen sensor
77 gear position sensor (gear position acquisition unit)
80, 280 gearbox
90 ECU
91 engine controlling unit (intake air amount acquisition unit)
93 coolant water temperature sensor failure detection unit (failure detector)
94 intake air temperature sensor failure detection unit (failure detector)
242 fan

## Claims

1. A straddled vehicle comprising:
an engine unit;
a temperature sensor configured to detect a temperature of a detection target; and
a failure detector configured to detect a failure of the temperature sensor, wherein:
the failure detector is configured to detect a failure of the temperature sensor based on at least one signal of the temperature sensor,
at least one generated heat amount-related parameter which relates to an amount of heat generated in the engine unit and influencing the temperature of the detection target and further relates to a state of the straddled vehicle, and
at least one dissipated heat amount-related parameter which relates to an amount of heat taken away from the straddled vehicle as the straddled vehicle runs and influencing the temperature of the detection target and further relates to an environment of the straddled vehicle.

2. The straddled vehicle according to claim 1, wherein,
the failure detector is configured to detect
a failure of the temperature sensor by comparing a first determination value derived based on the signal of the temperature sensor with a first failure determination threshold which is determined based on both the generated heat amount-related parameter and the dissipated heat amount-related parameter,
by comparing a second determination value derived based on at least one of the generated heat amount-related parameter and the dissipated heat amount-related parameter and the signal of the temperature sensor with a second failure determination threshold which is determined based on at least the other one of the generated heat amount-related parameter and the dissipated heat amount-related parameter, or
by comparing a third determination value derived based on the generated heat amount-related parameter, the dissipated heat amount-related parameter, and the signal of the temperature sensor with a predetermined third failure determination threshold.

3. The straddled vehicle according to claim 2, wherein,
when the failure detector detects the failure of the temperature sensor by comparing the first determination value with the first failure determination threshold,
the first failure determination threshold is determined when the generated heat amount-related parameter and the dissipated heat amount-related parameter satisfy a predetermined condition, is changed based on the generated heat amount-related parameter and the dissipated heat amount-related parameter, or is determined when one of the generated heat amount-related parameter and the dissipated heat amount-related parameter satisfies a predetermined condition and changed based on the other one of the generated heat amount-related parameter and the dissipated heat amount-related parameter,
when the failure detector detects the failure of the temperature sensor by comparing the second determination value with the second failure determination threshold,
the second determination value is determined when one of the generated heat amount-related parameter and the dissipated heat amount-related parameter satisfies a predetermined condition or is changed based on the one of the generated heat amount-related parameter and the dissipated heat amount-related parameter, and
the second failure determination threshold is determined when the other one of the generated heat amount-related parameter and the dissipated heat amount-related parameter satisfies a predetermined condition or is changed based on the other one of the generated heat amount-related parameter and the dissipated heat amount-related parameter, and
when the failure detector detects the failure of the temperature sensor by comparing the third determination value with the third failure determination threshold,
the third determination value is determined when the generated heat amount-related parameter and the dissipated heat amount-related parameter satisfy a predetermined condition, is changed based on the generated heat amount-related parameter and the dissipated heat amount-related parameter, or is determined when one of the generated heat amount-related parameter and the dissipated heat amount-related parameter satisfies a predetermined condition and changed based on the other one of the generated heat amount-related parameter and the dissipated heat amount-related parameter.

4. The straddled vehicle according to claim 3, wherein,
when one of the first failure determination threshold, the second determination value, the second failure determination threshold, and the third determination value is changed based on the generated heat amount-related parameter,
the failure detector is configured to change the one of the first failure determination threshold, the second determination value, the second failure determination threshold, and the third determination value to increase when the generated heat amount-related parameter is changed so that the generated heat amount increases, and to change the one of the first failure determination threshold, the second determination value, the second failure determination threshold, and the third determination value to decrease when the generated heat amount-related parameter is changed so that the generated heat amount decreases, and
when one of the first failure determination threshold, the second determination value, the second failure determination threshold, and the third determination value is changed based on the dissipated heat amount-related parameter,
the failure detector is configured to change the one of the first failure determination threshold, the second determination value, the second failure determination threshold, and the third determination value to decrease when the dissipated heat amount-related parameter is changed so that the dissipated heat amount increases, and to change the one of the first failure determination threshold, the second determination value, the second failure determination threshold, and the third determination value to increase when the dissipated heat amount-related parameter is changed so that the dissipated heat amount decreases.

5. The straddled vehicle according to any one of claims 2 to 4, wherein, one of the first determination value, the second determination value, and the third determination value is derived based on a difference between two signals of the temperature sensor.

6. The straddled vehicle according to any one of claims 1 to 5, wherein, the dissipated heat amount-related parameter relates to at least one of a flow rate of an air flow received by the straddled vehicle, an outside temperature, and a state of wetting of the straddled vehicle.

7. The straddled vehicle according to any one of claims 1 to 6, wherein,
the engine unit includes:
an engine main body including a combustion chamber; and
a catalyst portion including a catalyst which is configured to purify exhaust gas exhausted from the engine main body, and
and the temperature sensor is one of
an engine temperature sensor configured to detect a temperature of the engine main body,
a cooling liquid temperature sensor configured to detect a temperature of cooling liquid by which the engine main body is cooled,
an intake temperature sensor configured to detect a temperature of air sucked into the engine unit,
an oil temperature sensor configured to detect a temperature of lubrication oil by which the engine main body is lubricated,
an exhaust gas temperature sensor configured to detect a temperature of the exhaust gas exhausted from the combustion chamber, and
a catalyst temperature sensor configured to detect either a temperature of the exhaust gas inside the catalyst portion or a temperature of the catalyst.

8. The straddled vehicle according to any one of claims 1 to 7, wherein,
the engine unit includes:
an engine main body including a combustion chamber;
an oxygen sensor configured to detect oxygen density of the exhaust gas exhausted from the combustion chamber; and
a fuel supplier configured to supply fuel to the combustion chamber,
the straddled vehicle includes an intake air amount acquisition unit configured to acquire an intake air amount sucked into the combustion chamber, and
the at least one generated heat amount-related parameter includes one of
information which relates to an engine rotation speed and is obtained based on a signal of an engine rotation speed sensor configured to detect an engine rotation speed,
an engine driving time during which the engine unit is driven,
information which relates to a vehicle speed and is obtained based on a signal of a vehicle speed sensor configured to detect the vehicle speed of the straddled vehicle,
information which relates to an air-fuel ratio of mixture gas of air to fuel and is obtained from a signal of the oxygen sensor,
information which relates to a fuel supply amount of the fuel supplier, and
information which relates to an intake air amount acquired by the intake air amount acquisition unit.

9. The straddled vehicle according to any one of claims 1 to 8, wherein,
the engine unit includes:
an engine main body including a combustion chamber;
a fuel supplier configured to supply fuel to the combustion chamber; and
an ignition device configured to ignite the fuel in the combustion chamber,
the at least one dissipated heat amount-related parameter includes one of
information which relates to a vehicle speed and is obtained based on a signal of a vehicle speed sensor configured to detect the vehicle speed of the straddled vehicle,
information which relates to rotation speed of a fan configured to generate an air flow for cooling the engine main body,
a rotation time of the fan,
a temperature of air detected based on a signal of an outside air temperature sensor configured to detect a temperature of air outside the engine unit or a temperature of air sucked into the engine unit,
whether an idling stop by which driving of the engine unit is automatically stopped has been executed when a predetermined idling stop condition is satisfied,
a duration of stop of the engine unit due to the idling stop,
a duration of fuel cut control by which supply of the fuel by the fuel supplier is stopped, and
a duration of ignition cut control by which ignition by the ignition device is stopped.

10. The straddled vehicle according to any one of claims 1 to 9, wherein,
the engine unit includes a crankshaft, the straddled vehicle includes:
a gearbox which is configured to transmit rotation of the crankshaft to a driving wheel and includes a plurality of gear positions; and
a gear position acquisition unit which is configured to acquire gear position information indicating the current gear position of the gearbox, and
the at least one dissipated heat amount-related parameter includes
the gear position information of the gearbox, which is acquired by the gear position acquisition unit.

11. The straddled vehicle according to any one of claims 1 to 10, further comprising:
an engine controlling unit configured to control driving of the engine unit;
a battery configured to store power supplied to the failure detector and the engine controlling unit; and
a main switch which is turned on to supply the power from the battery to the engine controlling unit and
is turned off to stop supply of the power from the battery to the engine controlling unit,
the failure detector determining if there is the failure of the temperature sensor when the main switch is turned on and not determining if there is the failure of the temperature sensor when the main switch is turned off.
